# EUROPÄISCHE PATENTSCHRIFT

(11) **EP 1 432 885 B1**
(45) Veröffentlichungstag und Bekanntmachung des Hinweises auf die Patenterteilung: **28.12.2005**
(21) Anmeldenummer: 02776810.0
(22) Anmeldetag: 04.10.2002
(51) Int. Cl.: E05F 11/48

(54) **VORRICHTUNG ZUM EINSTELLEN EINER VON EINEM DOPPELSTRÄNGIGEN SEILFENSTERHEBER BEWEGTEN FENSTERSCHEIBE EINES KRAFTFAHRZEUGS**
DEVICE FOR ADJUSTING A WINDOW PANE DISPLACED BY A DOUBLE-STRANDED CABLE WINDOW LIFTER ON A MOTOR VEHICLE
DISPOSITIF POUR REGLER LA POSITION D'UNE VITRE DE VEHICULE AUTOMOBILE DEPLACEE PAR UN LEVE-VITRE A CABLE DOUBLE BRIN

(30) Priorität: 05.10.2001 DE 10151068
(43) Veröffentlichungstag der Anmeldung: 30.06.2004
(73) Patentinhaber: Brose Fahrzeugteile GmbH & Co. KG, Coburg, 96450 Coburg (DE)
(72) Erfinder: KLIPPERT, Uwe, 96472 Coburg (DE); SELIGER, Tillmann, 96052 Bamberg (DE); KRIESE, Olaf, 96486 Lautertal (DE); KAPS, Robert, 38104 Braunschweig (DE)
(74) Vertreter: Müller, Wolfram Hubertus
(86) Internationale Anmeldenummer: PCT/DE2002/003847
(87) Internationale Veröffentlichungsnummer: WO 2003/031756

(56) Entgegenhaltungen:
- EP-A- 0 420 617
- EP-A- 0 982 165
- US-A- 4 001 971
- US-A- 4 110 935
- US-A- 5 490 354
- US-A- 6 038 817
- US-B1- 6 272 948

## Beschreibung

Die Erfindung bezieht sich auf eine Vorrichtung zum Einstellen einer von einem doppelsträngigen Seilfensterheber bewegten Fensterscheibe eines Kraftfahrzeugs gemäß dem Oberbegriff des Anspruchs 1.

Aus der DE 37 27 153 A1 ist ein Bowdenzug-Fensterheber zum Verschieben einer Fensterscheibe in einem Kraftfahrzeug bekannt, der zwei Führungsschienen aufweist, an denen die Fensterscheibe mittels je eines Mitnehmers gehalten ist, die ihrerseits an den Führungsschienen formschlüssig gleitend geführt sind und an denen der die Fensterscheibe bewegende Bowdenzug angreift, der von einer Seiltrommel mit Kurbel bewegt wird und dabei die Fensterscheibe anhebt bzw. absenkt. Um eine Schieflage der Fensterscheibe auszugleichen und sicherzustellen, dass die Fensterscheibe in ihren Endlagen bündig mit der Ober- und Unterkante des Fensterscheibenausschnitts der Kraftfahrzeugtür abschließt, ist zumindest einer der beiden Mitnehmer in eine an der Führungsschiene gleitende Mitnehmerplatte und eine die Fensterscheibe tragende Halteplatte unterteilt, zwischen denen ein an der Mitnehmerplatte angeordneter Exzenterbolzen vorgesehen ist, mit dem eine Kippung der Fensterscheibe in ihrer Ebene zur Festlegung der Abzugslinie der Fensterscheibe vorgenommen, d.h. die in Z-Richtung des Kraftfahrzeugs obere Kante der Fensterscheibe relativ zur Erstreckungsrichtung der korrespondierenden Fensterscheibendichtung justiert werden kann.

Aus dem Stand der Technik sind zur Lösung dieses Problems Seilfensterheber mit mehrteiligen Mitnehmern entsprechend der obengenannten DE 37 27 153 A1 bekannt. Ein Teil des Mitnehmers ist dabei der Seilverbindung und ein anderer Teil der Scheibenbefestigung zugeordnet. Durch die gegenseitige Verschiebung der beiden Mitnehmerteile in Z-Richtung ist es möglich, die obere Kante der Fensterscheibe in eine zur Erstreckungsrichtung der zugeordneten Fensterscheibendichtung parallele Stellung zu bringen, ohne den Spannungszustand der Seile im Fensterheber zu ändern.

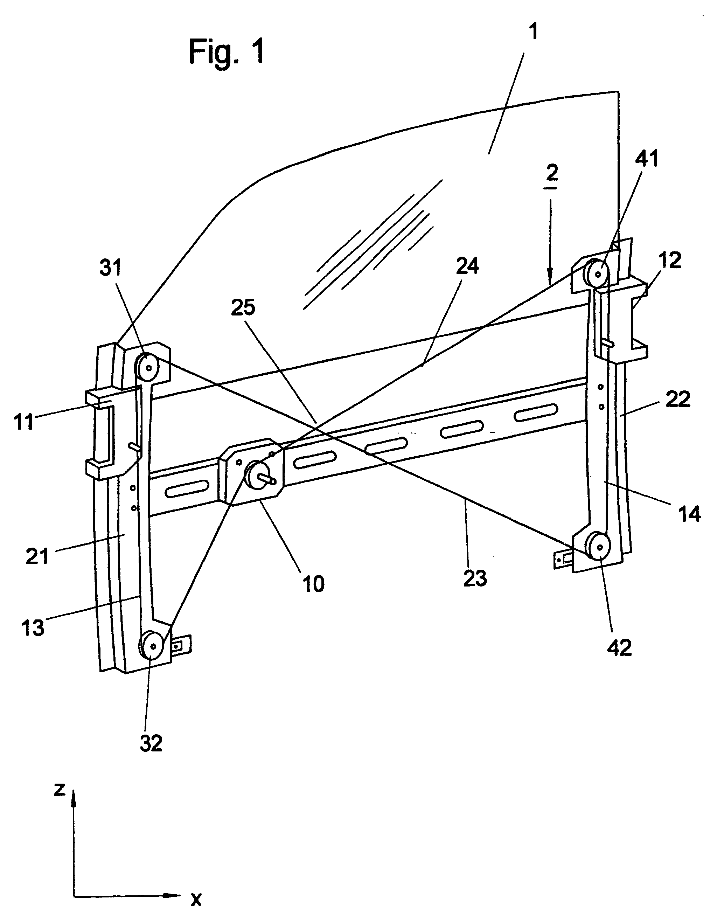

Figur 1 zeigt schematisch einen doppelsträngigen Seilfensterheber zum Anheben und Absenken einer Fensterscheibe 1 in Z-Richtung eines Kraftfahrzeugs. Der Seilfensterheber enthält zwei Führungsschienen 21, 22, an denen in Längsrichtung der Führungsschienen 21, 22 gleitend Mitnehmer 11, 12 zur Verbindung mit der Unterkante der Fensterscheibe 1 angeordnet sind. An den Enden der Führungsschienen 21, 22 sind Seilumlenkeinrichtungen 31, 32 bzw. 41, 42 befestigt, an denen ein Fensterheberseil 2 umgelenkt wird. In der schematischen Darstellung eines doppelsträngigen Seilfensterhebers gemäß Figur 1 sind zwei in Bezug auf die Fahrtrichtung des Kraftfahrzeugs (X-Richtung) vordere Seilumlenkeinrichtungen 31, 32 sowie zwei in Bezug auf die Fahrtrichtung des Kraftfahrzeugs hintere Seilumlenkeinrichtungen 41, 42 an den Enden der Führungsschienen 21, 22 vorgesehen, die in dieser Terminologie jeweils benachbart zur A-Säule bzw. B-Säule des Kraftfahrzeugs angeordnet sind. Die Seilumlenkeinrichtungen 31, 32 bzw. 41, 42 sind in der schematischen Darstellung gemäß Figur 1 als Seilrollen ausgeführt, sie können aber auch als Umlenk-Gleitstücke ausgeführt werden.

Die für die Kraftübertragung notwendige geschlossene Seilschlaufe des Fensterheberseils 2 erstreckt sich somit in den Seilabschnitten 21, 22 zwischen den Umlenkeinrichtungen 31, 32 bzw. 41, 42 entlang der Führungsschienen 21, 22, wobei das Seil 2 an zwei Stellen mit den Mitnehmern 11, 12 verbunden ist und wird über sich kreuzende Seilstränge 23, 24, aus denen sich ein Kreuzungspunkt 25 ergibt, zur jeweils anderen Führungsschiene 21, 22, bzw. zu einer Antriebseinheit 10 geleitet. Die Antriebseinheit 9 enthält eine Seiltrommel, wobei mehrere Umschlingungen des Seils 2 auf der Seiltrommel und gegebenenfalls eine formschlüssige Verbindung zwischen dem Seil 2 und der Seiltrommel über eine Seilnippeleinhängung die Kraftübertragung auf das Seil 2 gewährleisten. Die Antriebskraft wird entweder von einem Elektromotor oder von einer Kurbel erzeugt und in ein Getriebe eingeleitet, das die Seiltrommel enthält.

Alternativ zu dem in Figur 1 dargestellten offenen doppelsträngigen Seilfensterhebersystem können die sich kreuzenden Seilstränge 23, 24 des Seils 2 aus Bowdenhüllen wie beim doppelsträngigen Seilfensterheber der DE 37 27 153 A1 bestehen.

Eine Justage der Z-Position der Fensterscheibe 1 erfolgt bei diesem Seilfensterheber durch mindestens einen zweiteiligen Mitnehmer 11, 12, von denen ein Teil der Verbindung mit dem Seil 2 und den Führungsschienen 21, 22 und das andere Teil der Verbindung mit der Fensterscheibe 1 zugeordnet ist. Durch eine gegenseitige Positionsverschiebung der beiden Mitnehmerteile in Z-Richtung ist eine Parallelitätseinstellung der Fensterscheibe 1 möglich. Da die Mitnehmer 11, 12 jedoch schwer zugänglich sind, bzw. vor einer Einstellung einer Abzugslinie der Fensterscheibe 1 in eine für die Einstellung günstige Position verfahren werden müssen, ist das Einstellen der Abzugslinie der Fensterscheibe 1 bei bekannten doppelsträngigen Seilfensterhebern umständlich und zeitaufwendig. Darüber hinaus ist die zweigeteilte Konstruktion der Mitnehmer sehr aufwendig, wobei die Mitnehmer wegen der zweiteiligen Ausführung beispielsweise aus Metall-Druckguss gefertigt werden und daher sehr toleranzanfällig und teuer sind. Weiterhin dürfen derartige Mitnehmer nur geringe Fertigungstoleranzen aufweisen, so dass deren Herstellung insgesamt betrachtet vergleichsweise kostenintensiv ist.

Aus der DE 198 37 560 C2 ist ein doppeisträngiger Seilfensterheber für eine Kraftfahrzeugtür mit zwei heb- und senkbaren Mitnehmern bekannt, an denen eine Fensterscheibe befestigt ist. Die Mitnehmer sind über eine geschlossene Seilschleife mit einem reversierend arbeitenden Antrieb verbunden, wobei die geschlossene Seilschleife zwei sich kreuzende Seilstränge mit einem Seilzug und einem Verbindungsseilzug ausbildet. Im Verbindungsseilzug ist eine mit einem Exzenter versehene Federspannvorrichtung vorgesehen, die gegen den Verbindungsseilzug federunterstützt angestellt ist. Bei in Bezug auf die Fensteraussparung im Fensterrahmen schräg angeordneter Fensterscheibe schlägt die Fensterscheibe beim Heben einseitig am Fensterrahmen in einem Berührungspunkt oberhalb eines der beiden Mitnehmer an. Anschließend gibt der Seilzug gegen den Widerstand der Federspannvorrichtung nach und verschiebt den anderen Mitnehmer, so dass die Fensterscheibe gegen den Fensterrahmen geschwenkt und dadurch ausgerichtet wird. Nach der Ausrichtung der Fensterscheibe wird die Federspannvorrichtung in der entsprechenden Stellung zur Justage der Fensterscheibe fixiert.

Aufgabe der vorliegenden Erfindung ist es, eine Vorrichtung zum Einstellen einer von einem doppelsträngigen Seilfensterheber bewegten Fensterscheibe eines Kraftfahrzeugs gemäß dem Oberbegriff des Anspruchs 1 anzugeben, die einfach aufgebaut ist und eine einfache, sichere und äußerst genaue Einstellung der Lage der Fensterscheibe eines Kraftfahrzeugs gewährleistet.

Diese Aufgabe wird durch die Merkmale der Patentansprüche 1 und 15 gelöst.

Die erfindungsgemäße Lösung ermöglicht ein sehr einfaches und äußerst genaues Einstellen der Lage einer von einem doppelsträngigen Seilfensterheber bewegten Fensterscheibe eines Kraftfahrzeugs in der Fensterscheibenebene mit geringem Zeitaufwand und einfach aufgebauten und zu handhabenden Einstellungsmitteln. Die erfindungsgemäße Vorrichtung eignet sich sowohl für offene doppelsträngige Seilfensterhebersysteme als auch für Bowden-Fensterhebersysteme.

Die erfindungsgemäße Lösung geht von der Überlegung aus, daß in einem offenen Seilfensterhebersystem die Seilabschnitte in ihrer Spannung direkt beeinflußbar sind, so daß durch bewegliche Seilrollen die Weglängen der diagonal verlaufenden Seilabschnitte, d.h. der beiden sich kreuzenden Seilstränge verändert werden können. Auf diese Weise kann mit geringem Herstellungs- und Montageaufwand eine optimale Einstellung der Lage der Fensterscheibe vorgenommen werden, ohne daß eine Zweiteilung eines oder beider Mitnehmer erforderlich ist.

Die erfindungsgemäße Lösung läßt verschiedene Ausführungsformen sowohl an offenen Seilfensterhebersystemen als auch an Bowden-Fensterhebersystemen zu, wobei allen Ausführungsformen die gegenläufige Längenänderung der sich kreuzenden Seilstränge gemeinsam ist, die jedoch mit unterschiedlichen Mitteln realisiert wird.

In einer ersten Ausführungsform weist der Seilfensterheber eine mindestens abschnittsweise offene Seilführung auf und die Mittel zur Veränderung der Länge der sich kreuzenden Seilstränge sind an der offenen Seilführung als Seilauslenkelemente angeordnet, die zu einer Seilauslenkvorrichtung gekoppelt ausgebildet sind, die bei Verlängerung eines der beiden kreuzenden Seilstränge um eine einstellbare Länge den jeweils anderen Seilstrang um die im wesentlichen gleiche Länge verkürzt, so dass beispielsweise zur Veränderung der Position des der A-Säule des Kraftfahrzeugs benachbarten Mitnehmers das Diagonalseil, d.h. der eine Seilstrang, um einen Betrag verlängert und der Rückholstrang, d.h. der andere Seilstrang der sich kreuzenden Seilstränge, um dasselbe Mass verkürzt wird. Dabei hält die Koppelung der Seilauslenkelemente zu einer Seilauslenkvorrichtung die Teilezahl und die Komplexität der Vorrichtung möglichst gering.

Die Seilauslenkvorrichtung zur gegenläufigen Veränderung der Länge der sich kreuzenden Seilstränge, d.h. der Verlängerung des einen Seilstranges und der Verkürzung des anderen Seilstranges um die im wesentlichen gleiche einstellbare Länge kann translatorisch und/oder rotatorisch justierbar ausgebildet sein. Dadurch kann eine beliebige Bogenform oder auch eine abschnittsweise rein translatorische oder rotatörische Auslenkung realisiert werden.

In einer ersten Variante der Erfindung ist die Seilauslenkvorrichtung mit mindestens einer vorderen und hinteren Seilumlenkeinrichtung als Mittel zur Veränderung der Lage der sich kreuzenden Seilstränge ausgebildet und weist eine schwenkbare Traverse auf, deren Enden mit den Seilumlenkeinrichtungen verbunden sind und deren Neigung mit einer arretierbaren Stelleinrichtung einstellbar ist.

Bei dieser gekoppelten Justierung der Mitnehmer und damit der Fensterscheibe sind keine zusätzlichen, auf das Seil einwirkenden Spannmittel erforderlich, da die Justiereinrichtung unmittelbar an der Seilumlenkeinrichtung angreift

Die Seilauslenkvorrichtung ist in einer weiteren Variante der Erfindung im Bereich der Kreuzung der beiden sich kreuzenden Seilstränge angeordnet und ermöglicht daher mit einer einzigen Handhabung eine exakte Einstellung der Fensterscheibenausrichtung.

Vorzugsweise ist die Seilauslenkvorrichtung insbesondere auf einer annähernd kreisförmigen Bahn von einer ersten Position in eine zweite Position verschwenkbar.

In dieser Ausführungsform werden das Diagonal- und Rückholseil beispielsweise über auf einer gemeinsamen Achse laufende Doppelseilrollen geführt, wobei die Bahn, auf der die Doppelseilrollenachse geführt und fixiert wird, so zu wählen ist, dass bei einer Verkürzung des einen Seilstranges der sich kreuzenden Seilstränge der andere Seilstrang um das gleiche Mass verlängert wird. Somit spannt die Doppelseilrolle in den beiden Endpositionen eines der beiden Mitnehmer den einen Seilabschnitt voll vor und beläßt den anderen Seilabschnitt gerade in gestreckter Position.

Die sich kreuzenden Seilstränge sind axial entlang der Drehachse der Doppelseilrolle beabstandet zueinander angeordnet. Dabei kann die Doppelseilrolle im Bereich einer vorderen oder hinteren Seilumlenkeinrichtung angeordnet werden.

Um eine größere Anpassung an die Einbauverhältnisse in einer Kraftfahrzeugtür zu erreichen, können die Bahnen, auf denen sich die Doppelseilrolle bewegt, in Form und Lage durch weitere Seilumlenkeinrichtungen verändert werden, die die sich kreuzenden Seilstränge des Fensterheberseils verändern. Dementsprechend besteht ein weiteres Merkmal der erfindungsgemäßen Lösung darin, dass in mindestens einem der beiden sich kreuzenden Seilstränge mindestens eine weitere Seilumlenkeinrichtung angeordnet ist, die die räumliche Lage des Kreuzungspunktes der beiden sich kreuzenden Seilstränge beeinflußt.

Das Verschwenken der Seilauslenkvorrichtung von einer ersten Position in eine zweite Position kann alternativ dadurch vorgenommen werden, daß die Seilauslenkvorrichtung mindestens zwei auf einer um ihre Achse drehbaren Kreisscheibe angeordnete Seilführungselemente umfaßt, von denen mindestens eines an einem der beiden sich kreuzenden Seilstränge anliegt. Durch Rotation der Kreisscheibe ist die Seilauslenkvorrichtung von der ersten Position in die zweite Position verschwenkbar.

Eine weitere Ausführungsform besteht darin, daß die Seilauslenkvorrichtung zwei entlang einer Achse miteinander gekoppelte Seilauslenkelemente umfaßt, die jeweils einen der beiden sich kreuzenden Seilstränge auslenken, wobei die Seilauslenkvorrichtung entlang der Achse verschiebbar angeordnet ist.

In dieser Ausführungsform einer Seilauslenkvorrichtung wird die Achse, entlang der die Auslenkvorrichtung verschiebbar angeordnet ist, im wesentlichen parallel zur Verbindungslinie der unteren vorderen Seilumlenkeinrichtung mit der unteren hinteren Seilumlenkeinrichtung verschoben. Diese Anordnung kann an beliebiger Stelle zwischen der unteren vorderen und der unteren hinteren Seilumlenkeinrichtung oder zwischen der oberen vorderen und oberen hinteren Seilumlenkeinrichtung erfolgen.

Weiterhin kann die Seilumlenkeinrichtung in Doppelfunktion sowohl einen Seillängenausgleich bewirken als auch einer Nachführung der Seilspannung dienen. Für einen Bowdenzug-Fensterheber wird die erfindungsgemäße Lösung dadurch realisiert, dass die sich kreuzenden Seilstränge als Bowdenstränge ausgebildet und zumindest abschnittsweise in Bowdenhüllen angeordnet und die Mittel zur Veränderung der Länge der sich kreuzenden Bowdenstränge aus Justiereinrichtungen zur Veränderung der Länge der Bowdenhüllen bestehen.

Durch die Veränderung der Länge der sich kreuzenden Bowdenstränge durch eine Veränderung der Länge der Bowdenhüllen kann aus den sich daraus ergebenden unterschiedlichen Seilabschnittslängen eine Ausrichtung der Fensterscheibe in Bezug auf den Fensterrahmen mit einfachen Mitteln durchgeführt werden.

Die Justage der Fensterscheibe über eine Veränderung der Längen der Bowdenhüllen kann sowohl über unabhängig voneinander in den sich kreuzenden Bowdensträngen angeordnete Justiereinrichtungen erfolgen, mit denen die Länge der Bowdenhüllen zwischen den mit den Mitnehmern verbundenen Bowdenzugnippeln des einen Bowdenstranges um ein vorgebbares Maß verlängert und die Länge der Bowdenhülle zwischen den mit den Mitnehmern verbundenen Bowdenzugnippeln des anderen Bowdenstranges um ein gleiches Maß verkürzt wird.

Alternativ kann die Justage der Fensterscheibe über eine Veränderung der Längen der Bowdenhüllen durch miteinander gekoppelte Justiereinrichtungen erfolgen, so dass bei einer Verlängerung eines der beiden sich kreuzenden Bowdenstränge um eine einstellbare Länge der jeweils andere Bowdenstrang um die im Wesentlichen gleiche Länge verkürzt wird.

Bei voneinander unabhängigen Justiereinrichtungen kann die Länge der Bowdenhüllen unabhängig voneinander translatorisch und/oder rotatorisch verändert werden, wobei die Justiereinrichtungen im Bereich zwischen den vorderen und hinteren Seilumlenkeinrichtungen angeordnet sind.

Miteinander gekoppelte Justiereinrichtungen können unter Beibehaltung desselben Funktionsprinzips auf mannigfaltige Weise ausgebildet werden.

In einer ersten Ausführungsform besteht die Justiereinrichtung aus winkelverstellbaren Kurvenscheiben, an denen Bowdenaufnahmen der Bowdenstränge anliegen.

Die winkelverstellbaren Kurvenscheiben sind in zwei übereinander liegenden Ebenen angeordnet und weisen spiralförmige Kurvenflächen auf, an denen die mit Bowdenhüllen verbundenen Bowdenaufnahmen jeweils eines Bowdenteilstranges, während die Bowdenhüllen der jeweils anderen Bowdenteilstränge über Aufnahmen unmittelbar mit dem Gehäuse der Justiereinrichtung verbunden sind.

Alternativ sind die winkelverstellbaren Kurvenscheiben in zwei übereinander liegenden Ebenen angeordnet und weisen spiralförmige Kurvenflächen auf, an denen die mit Bowdenhüllen verbundenen Bowdenaufnahmen aller Bowdenteilstränge anliegen.

Zur einfachen Justage des Fensterhebers weist die Justiereinrichtung einen Formschlussbereich zur Aufnahme eines Justierwerkzeuges auf.

In einer zweiten Ausführungsform weist die Justiereinrichtung ein Zahnrad auf, das mit zwei Zahnstangen kämmt, die mit Bowdenteilsträngen der beiden sich kreuzenden Bowdenstränge verbunden sind, die zwischen der Justiereinrichtung und den oberen oder unteren Seilumlenkeinrichtungen angeordnet sind.

Die Zahnstangen sind vorzugsweise mit den Bowdenaufnahmen der Bowdenteilstränge verbunden oder an den Bowdenaufnahmen angeformt.

In einer dritten Ausführungsform besteht die Justiereinrichtung aus einem Parallelogramm-Hebelgetriebe, dessen einander gegenüber liegende Gelenke mit den Bowdenaufnahmen der Bowdenstränge verbunden sind. Eine Spindelverstellung dient zur Einstellung des Abstandes der einander gegenüber liegenden Gelenke des Parallelogramm-Hebelgetriebes.

In einer vierten Ausführungsform besteht die Justiereinrichtung aus einem Schieber mit Kulissen mit in Bezug auf dessen Verschieberichtung einander entgegengesetzter Neigung und zwei mit Bowdenaufnahmen jeweils einer Bowdenhülle der sich kreuzenden Bowdenstränge verbundene Zapfen sind in den Kulissen gelagert sind.

In einer fünften Ausführungsform weist die Justiereinrichtung einen um eine Achse drehbaren Hebel auf, der zwei an entgegengesetzten Enden vorgesehene Kulissen enthält, in die mit den Bowdenaufnahmen zweier Bowdenhüllen der sich kreuzenden Bowdenstränge verbundene Zapfen eingreifen.

Bei einer Kombination eines offenen doppelsträngigen Seilfensterhebersystems mit Bowdenhüllen in einzelnen Seilabschnitten kann die erfindungsgemäße Lösung in der Weise eingesetzt werden, dass der Seilfensterheber eine mindestens abschnittsweise offene Seilführung aufweist und die Mittel zur Veränderung der Länge der sich kreuzenden Seilstränge an der offenen Seilführung als Seilauslenkelemente angeordnet sind.

Anhand von in der Zeichnung dargestellten Ausführungsbeispielen soll der der Erfindung zugrunde liegende Gedanke näher erläutert werden. Es zeigen:
- Fig. 1: eine schematische Darstellung eines doppelsträngigen Seilfensterhebers nach dem Stand der Technik;
- Fig. 2: eine schematische Darstellung eines doppelsträngigen Seilfensterhebers mit an einer schwenkbaren und arretierbaren Traverse als Seilauslenkvorrichtung befestigten Seilumlenkrollen;
- Fig. 3: eine schematische Darstellung eines doppelsträngigen Seilfensterhebers mit auf einer Seilauslenkvorrichtung angeordneten und als Doppelseilrollen ausgebildeten Auslenkvorrichtungen;
- Fig. 4: eine schematische Darstellung wie in Figur 3 mit weiteren Seilumlenkeinrichtungen zur Beeinflussung der räumlichen Lage des Kreuzungspunktes der beiden sich kreuzenden Seilstränge;
- Fig. 5: eine schematische Darstellung einer Seilauslenkvorrichtung wie in Figur 3 mit im Bereich der vorderen Seilumlenkeinrichtung angeordneter Doppelseilrolle;
- Fig. 6: eine schematische Darstellung eines doppelsträngigen Seilfensterhebers mit einer Seilauslenkvorrichtung mit zwei auf einer um ihre Achse drehbaren Kreisscheibe angeordneten Seilführungselementen;
- Fig. 7: eine schematische Darstellung eines doppelsträngigen Seilfensterhebers mit einer Seilauslenkvorrichtung mit zwei entlang einer Achse miteinander gekoppelten Seilauslenkelementen;
- Fig. 8: eine schematische Darstellung eines doppelsträngigen Seilfensterhebers mit abschnittsweise in Bowdenhüllen angeordneten sich kreuzenden Seilsträngen und Vorrichtungen zur Veränderung der Länge der Bowdenhüllen;
- Fig. 9: eine schematische Darstellung eines doppelsträngigen Seilfensterhebers vom Typ eines geschlossenen Systems unter Verwendung von Bowden und einer gekoppelten Justage der sich kreuzenden Bowdenstränge;
- Fig. 10: eine vergrößerte Darstellung der Justiereinrichtung gemäß Figur 9 mit in zwei übereinander liegenden Ebenen angeordneten Kurvenscheiben und zwei Bowdenaufnahmen;
- Fig. 11 u. 12: eine vergrößerte Darstellung der Justiereinrichtung gemäß Figur 9 mit zwei in übereinander liegenden Ebenen angeordneten Kurvenscheiben und vier Bowdenaufnahmen;
- Fig. 13: eine vergrößerte, schematische Darstellung einer Justiereinrichtung mit einem Zahnstangengetriebe;
- Fig. 14: eine vergrößerte, schematische Darstellung einer Justiereinrichtung mit einem Parallelogramm-Hebelgetriebe;
- Fig. 15: eine vergrößerte, schematische Darstellung einer Justiereinrichtung mit einem Schieber mit verschiebbaren Kulissen entgegengesetzter Neigung und
- Fig. 16: eine vergrößerte, schematische Darstellung einer Justiereinrichtung mit einem drehbaren Hebel mit Ausgleichskulissen zur Aufnahme von Zapfen zweier Bowdenaufnahmen.

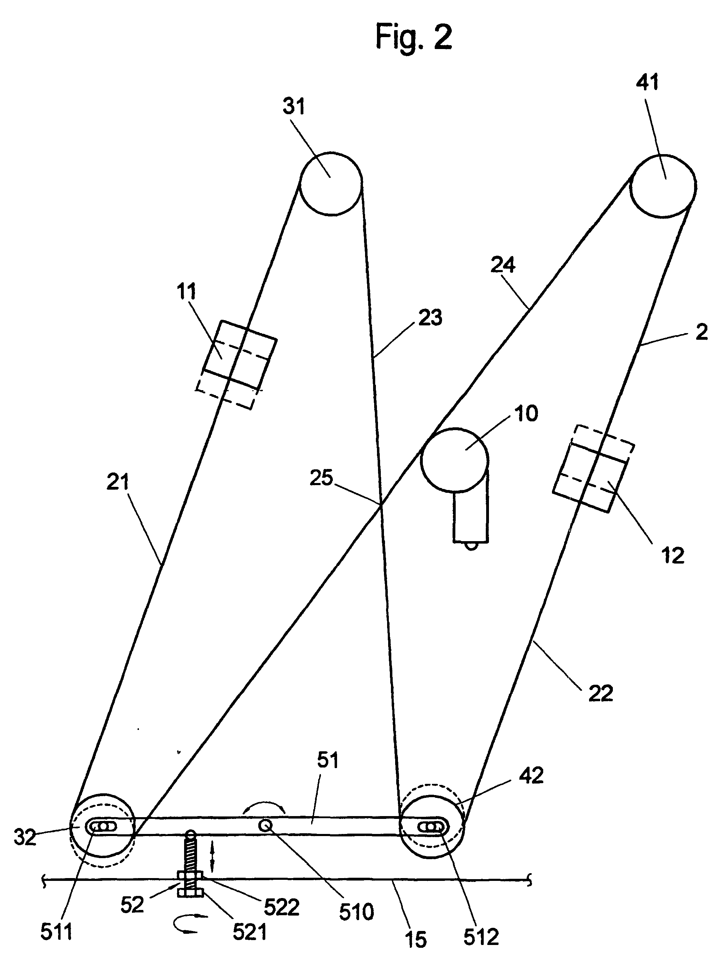

Die nachfolgende Beschreibung der in den Figuren 2 bis 8 dargestellten Ausführungsbeispiele der erfindungsgemäßen Lösung bezieht sich auf einen in Figur 1 dargestellten Seilfensterheber unter Verwendung von übereinstimmenden Bezugsziffem für dieselben Funktionsteile des Seilfensterhebers. Dabei ist die Ausführungsform der vorderen Seilumlenkeinrichtungen 31, 32 sowie der hinteren Seilumlenkeinrichtungen 41, 42 als Seilrollen oder Seilumlenkstücke ebenso beliebig wie die Formgebung der Führungsschienen 21, 22, der Mitnehmer 11, 12 und des Seilantriebs 9, der wahlweise aus einer manuell betätigbaren Handkurbel oder aus einem elektromotorischen Antrieb bestehen kann.

Der in Figur 2 schematisch dargestellte doppelsträngige Seilfensterheber weist entsprechend dem schematisch in Figur 1 dargestellten Seilfensterheber zwei Mitnehmer 11, 12 zur Aufnahme einer Scheibenunterkante einer nicht dargestellten Fensterscheibe, Seilumlenkeinrichtungen 31, 32 bzw. 41, 42 und ein mit einem Seilantrieb 10 und mit den Mitnehmern 11, 12 verbundenes und eine Seilschlaufe mit sich kreuzenden Seilsträngen um die Umlenkeinrichtungen 31, 32 bzw. 41, 42 bildendes Fensterheberseil 2 auf. Die Seilumlenkeinrichtungen 31, 32 bzw. 41, 42 bestehen aus in Fahrtrichtung des Kraftfahrzeugs vorderen Seilumlenkeinrichtungen 31, 32 sowie in Fahrtrichtung des Kraftfahrzeugs hinteren Seilumlenkeinrichtungen 41, 42 und sind jeweils am oberen und unteren Ende zweier ebenfalls nicht dargestellter Führungsschienen angeordnet oder unmittelbar am Türinnenblech befestigt, so dass eine obere vordere Seilumlenkeinrichtung 31, eine untere vordere Seilumlenkeinrichtung 32 sowie eine obere hintere Seilumlenkeinrichtung 41 und eine untere hintere Seilumlenkeinrichtung 42 zur Seilumlenkung vorgesehen ist.

Das Seil 2 kann somit in mehrere Abschnitte unterteilt werden, von denen ein erster Abschnitt 21 zwischen der oberen vorderen Seilumlenkeinrichtung 31 und der unteren vorderen Seilumtenkeinrichtung 32 entlang der Fensterscheibenführung verläuft und mit dem ersten Mitnehmer 11 verbunden ist, während ein zweiter Abschnitt 22 des Seils 2 zwischen der oberen hinteren Seilumlenkeinrichtung 41 und der unteren hinteren Seilumlenkeinrichtung 42 entlang der Fensterscheibenführung verläuft und mit dem zweiten Mitnehmer 12 verbunden ist. Zwischen den vorderen und hinteren Seilumlenkeinrichtungen 31, 32 bzw. 41, 42 sind zwei sich kreuzende Seilstränge 23, 24 des Seils 2 ausgebildet, von denen der eine Seilstrang 23 das Diagonalseil und der andere Seilstrang 24 das mit dem Fensterheberantrieb 9 verbundene Rückholseil bildet. Das Diagonalseil 23 und das Rückholseil 24 kreuzen sich im Seilkreuzungspunkt 25.

Zum Justieren der Abzugslinie der Fensterscheibe, d.h. Ausrichten der Fensterscheibe in der Fensterscheibenebene bzw. in z-Richtung des Kraftfahrzeugs, können der vordere und/oder der hintere Mitnehmer 11, 12 angehoben bzw. abgesenkt werden, so daß entsprechend die vordere bzw. hintere Ecke der Fensterscheibenunterkante angehoben oder abgesenkt wird. Dies erfolgt vorzugsweise in einer vorgegebenen Stellung der Fensterscheibe, beispielsweise in der maximalen oberen Position oder Schließstellung der Fensterscheibe oder mittels einer Justageeinrichtung, in der die Fensterscheibe in eine Anschlagposition gefahren wird. Bildet sich in dieser Anschlagposition ein keilförmiger Spalt an der Oberkante der Fensterscheibe aus, so kann durch Anheben und/oder Absenken eines oder beider Mitnehmer 11, 12 die Fensterscheibe so justiert werden, daß die Fensterscheibenoberkante bündig mit der Justageeinrichtung oder der oberen Kante der Fensterscheibenöffnung einer Kraftfahrzeugtür abschliesst.

Die hierfür erforderliche Einstellung der Fensterscheibe ist Gegenstand der in den Figuren 2 bis 8 dargestellten Einstellmittel mit denen beispielsweise der vordere Mitnehmer 11 um einen bestimmten Betrag abgesenkt wird.

Zum Absenken des vorderen Mitnehmers 11 von der in durchgezogener Linie dargestellten Stellung in die gestrichelt dargestellte Position, ist eine Traverse 51 vorgesehen, deren Enden mit der vorderen und hinteren unteren Seilumlenkrolle 32, 42 verbunden sind und die um ein zwischen den Enden vorgesehenes Drehgelenk 510 schwenkbar ist. Eine beispielsweise mit dem Türboden 15 einer Kraftfahrzeugtür verbundene Stelleinrichtung 52 stützt sich vom Drehgelenk 510 beabstandet an der Traverse 51 ab, so dass durch eine Betätigung der Stelleinrichtung 52 der Abstand der Traverse 51 zum Türboden 15 entsprechend dem neben die Stelleinrichtung 52 gezeichneten Doppelpfeil verändert werden kann. Dadurch werden die mit den Enden der Traverse 51 verbundenen Seilumlenkrollen 32, 42 um das Drehgelenk 510 geschwenkt und damit die Länge der sich kreuzenden Seilstränge 23, 24 gegenläufig zueinander verändert, so dass in der in Fig. 2 dargestellten Konfiguration beispielsweise der eine Mitnehmer 11 entsprechend der gestrichelten Linie abgesenkt wird, während der andere Mitnehmer 12 zum Positionsausgleich und Ausrichten der Fensterscheibe angehoben wird.

Zum Bewegungsausgleich beim Anheben oder Absenken der Seilumlenkrollen 32, 42 sind Langlöcher 511, 512 in der Traverse 51 vorgesehen.

Die Stelleinrichtung 52 besteht aus einer Stellschraube 521, die über eine Stellmutter 522 am Türboden 15 und mit ihrem dem Schraubenkopf entgegengesetzten Ende 523 an der Traverse 51 abgestützt ist. Durch Drehen des Schraubenkopfes wird der Abstand zwischen der Traverse 51 und dem Türboden 15 - wie vorstehend beschrieben - verändert.

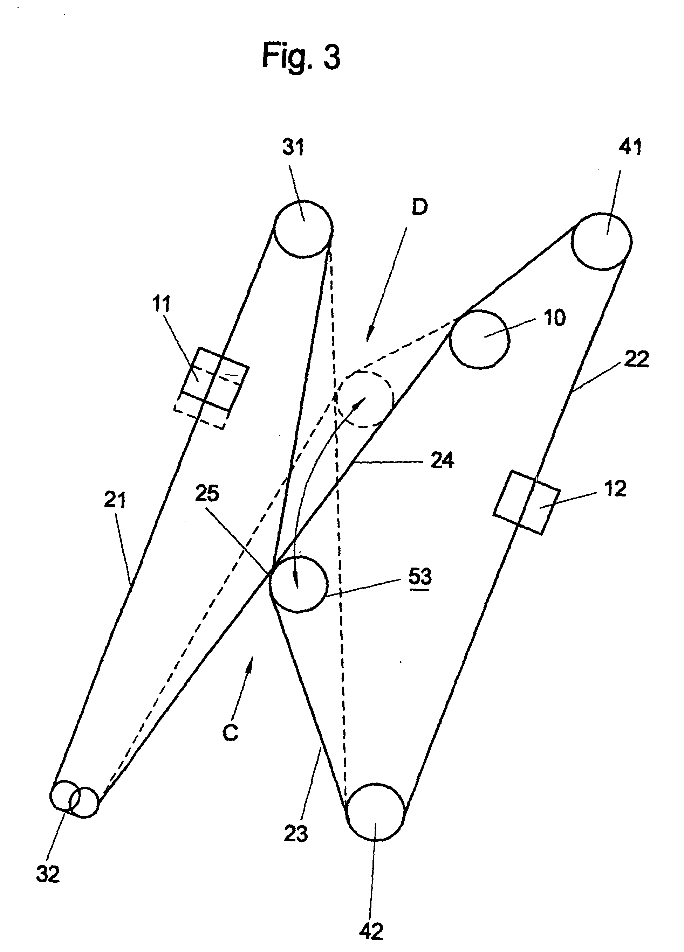

Figur 3 zeigt eine Einstellvorrichtung für einen doppelsträngigen Seilfensterheber mit einer gegenüber der Vorrichtung gemäß Figur 1 verringerten Teilezahl, bei der die Seilauslenkelemente zu einer Seilauslenkvorrichtung 53 gekoppelt sind, die bei Verlängerung eines der beiden sich kreuzenden Seilstränge 23, 24 um eine einstellbare Länge den jeweils anderen Seilstrang 24, 23 um die im wesentlichen gleiche Länge verkürzt. Die Seilauslenkvorrichtung 53 ist im Bereich des Kreuzungspunktes 25 der beiden sich kreuzenden Seilstränge 23, 24 angeordnet und besteht aus einer Doppelseilrolle, die mit beiden sich kreuzenden Seilsträngen 23, 24 in Wirkverbindung steht. Die beiden sich kreuzenden Seilstränge 23, 24 sind axial entlang der Drehachse der Doppelseilrolle 53 beabstandet zueinander, d.h. in unterschiedlichen Ebenen angeordnet. Zur gegenläufigen Veränderung der Länge der sich kreuzenden Seilstränge 23, 24 ist die Seilauslenkvorrichtung 53 von einer ersten Position C in eine zweite Position D verschwenkbar, wobei die Verschwenkung der Seilauslenkvorrichtung 53 auf einer angenähert kreisförmigen Bahn von der ersten Position C in die zweite Position D erfolgt.

Zum Absenken des vorderen Mitnehmers 11 von der in durchgezogener Linie dargestellten Stellung in die in gestrichelter Linie dargestellte Position ist entsprechend der schematischen Darstellung in Figur 3 die Seilauslenkvorrichtung 53 somit von der Position C in die Position D zu verschwenken, in der die sich kreuzenden Seilstränge 23, 24 und die Seilauslenkvorrichtung 53 gestrichelt dargestellt sind.

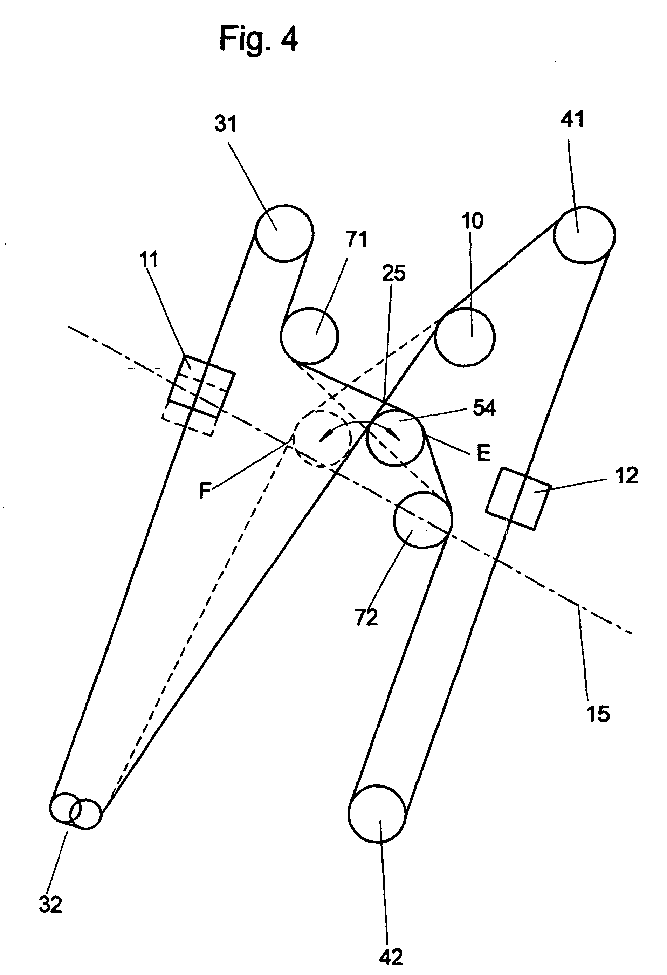

Figur 4 zeigt in schematischer Darstellung eine der Einstellvorrichtung gemäß Figur 3 entsprechende Einstellvorrichtung, bei der durch Hinzufügen von zusätzlichen Seilumlenkeinrichtungen 71, 72 der Kreuzungspunkt 25 der sich kreuzenden Seilstränge 23, 24 und die Bewegungsbahn der Seilauslenkelemente beeinflußt wird.

Bei dem in Figur 4 dargestellte Ausführungsbeispiel markiert die strichpunktierte Linie 15 das Ende einer Fensterheber-Grundplatte, mit der beispielsweise die beiden Führungsschienen des doppelsträngigen Seilfensterhebers miteinander verbunden sind und auf der der Seilantrieb 10 befestigt ist. Durch Hinzufügen der beiden zusätzlichen Seilumlenkeinrichtungen 71, 72 befindet sich die Bewegungsbahn der als Doppelseilrolle ausgebildeten Seilauslenkelemente 54 vollständig auf der Fensterheber-Grundplatte, so daß eine entsprechende Führungs- und Haltevorrichtung für die Doppelseilrolle oder Seilauslenkelemente vorgesehen werden kann.

Die Doppelseilrolle 54 steht analog zur Einstellvorrichtung gemäß Figur 3 mit den beiden sich kreuzenden Seilsträngen 23, 24 in Wirkverbindung, wobei die beiden sich kreuzenden Seilstränge 23, 24 axial entlang der Drehachse der Doppelseilrolle 54 beabstandet zueinander angeordnet sind.

Zum Absenken des vorderen Mitnehmers 11 von der in durchgezogener Linie dargestellten Position in die in gestrichelter Linie dargestellte Position wird die Doppelseilrolle 54 von der Position E in die Position F verschwenkt, in der sie in gestrichelter Linie dargestellt ist. In dieser Stellung der Seilauslenkvorrichtung 54 verlaufen die sich kreuzenden Seilstränge 23, 24 ebenfalls entsprechend den gestrichelten Linien.

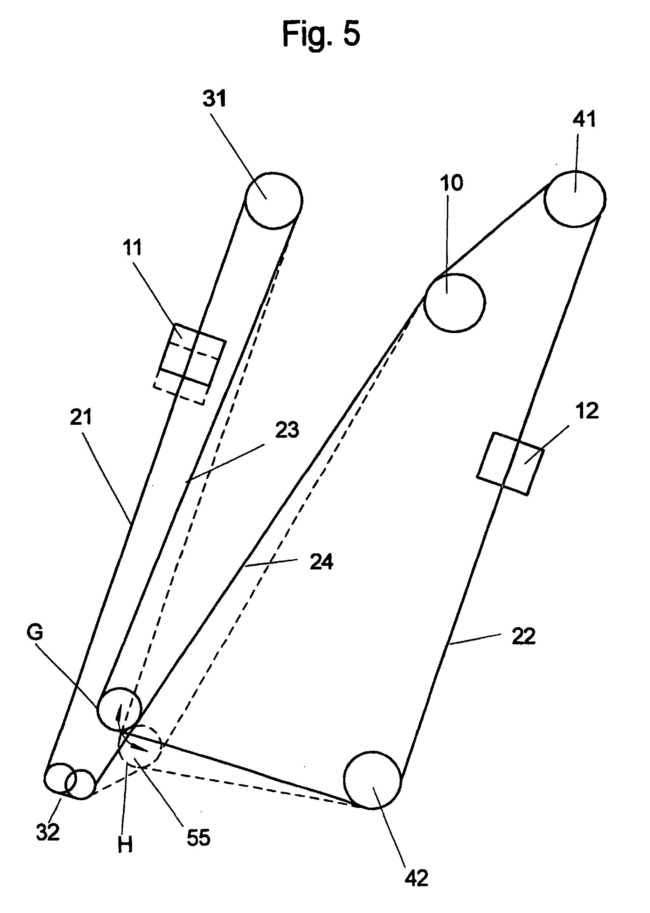

In den Ausführungsbeispielen der Figuren 3 und 4 ist die Seilauslenkvorrichtung 53 bzw. 54 im Bereich des Kreuzungspunktes 25 der beiden sich kreuzenden Seilstränge 23, 24 angeordnet. In Figur 5 ist ein Ausführungsbeispiel dargestellt, bei dem die ebenfalls als Doppelseilrolle ausgebildete Seilauslenkvorrichtung 55 im Bereich der vorderen unteren Seilumlenkeinrichtung 32 angeordnet ist. Diese Anordnung ermöglicht vergleichsweise kurze Seilauslenkungen für gleiche Lageveränderungen des vorderen Mitnehmers 11, bedingt aber eine längere Seilschlaufe. Die Verlagerung der Seilauslenkvorrichtung 55 in den Bereich einer der beiden Seilumlenkeinrichtungen 31, 32 bzw. 41, 42 belegt die freie Wahl der Anordnung der Seilauslenkvorrichtung, so daß eine Anpassung an konstruktive Gegebenheiten mit einfachen Mitteln möglich ist.

Zum Absenken des vorderen Mitnehmers 11 von der in durchgezogener Linie dargestellten Position in die in gestrichelter Linie dargestellte Position wird die Doppelseilrolle 55 von der Position G in die Position H verschwenkt, in der sie in gestrichelter Linie dargestellt ist. In dieser Stellung der Seilauslenkvorrichtung 55 verlaufen die sich kreuzenden Seilstränge 23, 24 entsprechend den gestrichelten Linien.

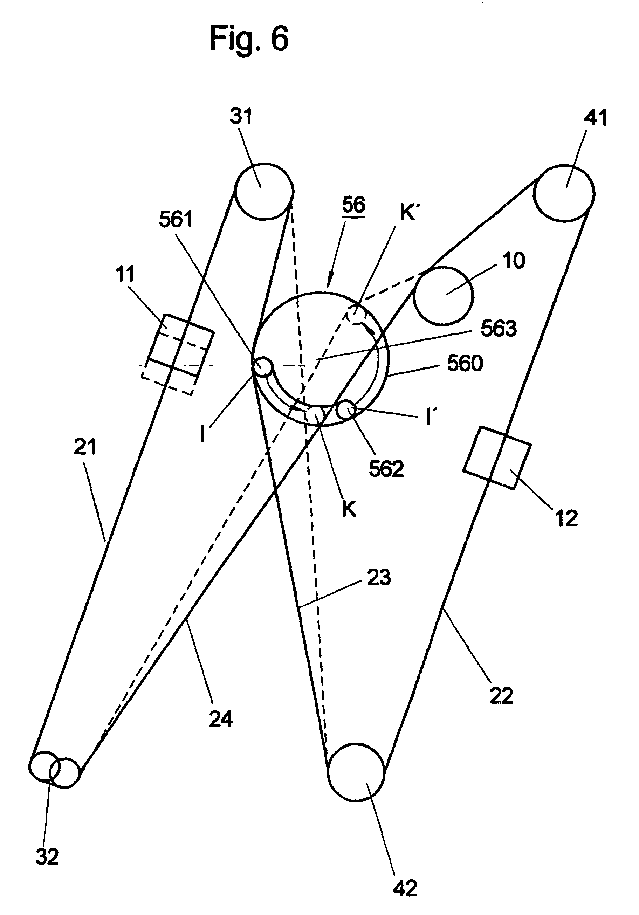

Figur 6 zeigt in schematischer Darstellung eine Vorrichtung zum Einstellen einer von einem doppelsträngigen Seilfensterheber bewegten Fensterscheibe mit einer Seilauslenkvorrichtung 56, die eine um ihre Mittelachse 563 drehbare Kreisscheibe 560 aufweist, auf der zwei Seilauslenkelemente 561, 562 angeordnet sind. Von den beiden Seilauslenkelementen 561, 562 liegt mindestens eines an einem der beiden sich kreuzenden Seilstränge 23, 24 an. Die dadurch bedingte Verlängerung des betreffenden Seilstränges 23, bzw. 24 führt zum Anheben bzw. Absenken mindestens eines der beiden Mitnehmer 11, 12.

Figur 6 zeigt in durchgezogenen Linien eine erste Position des vorderen Mitnehmers 11, in der das Diagonalseil 23 durch das erste Seilauslenkelement 561 ausgelenkt ist, während das zweite Seilauslenkelement 562 am Rückholseil 24 anliegt, ohne dieses auszulenken. Zum Absenken des vorderen Mitnehmers 11 in die gestrichelt dargestellte Position wird die drehbare Kreisscheibe 560 von der Position I des ersten Seilauslenkelements 561 in die Position K des ersten Seilauslenkelements 561 um ihre Mittelachse 563 gedreht, so daß das zweite Seilauslenkelement 562 das Rückholseil 24 auslenkt, während das erste Seilauslenkelement 561 die Auslenkung des Diagonalseils 23 zurücknimmt, bis sich die Seilauslenkelemente 561, 562 und die sich kreuzenden Seilstränge 23, 24 in der gestrichelt dargestellten Lage befinden.

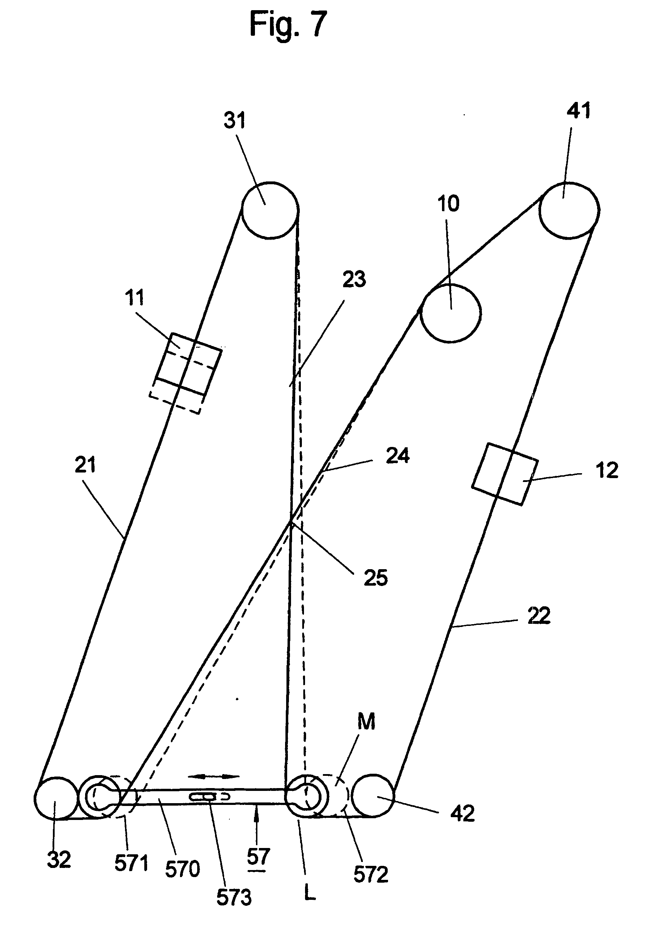

Alternativ zur Rotation einer Seilauslenkvorrichtung 56 mit einer Kreisscheibe 560 gemäß Figur 6 kann eine translatorische Bewegung einer Seilauslenkvorrichtung eingesetzt werden, wie dies schematisch in Figur 7 dargestellt ist. Bei dieser Vorrichtung zum Einstellen einer von einem doppelsträngigen Seilfensterheber bewegten Fensterscheibe eines Kraftfahrzeugs weist die Seilauslenkvorrichtung 57 zwei Ober eine Achse 570 miteinander gekoppelte Seilauslenkelemente 571, 572 auf, die an jeweils einem der beiden sich kreuzenden Seilstränge 23, 24 anliegen und bei einer Verschiebung der Achse 570 von der Position L in die Position M die Richtung und - wenn auch nur geringfügig - die Länge der Seilstränge 23 bzw. 24 verändern und damit den Kreuzungspunkt 25 der sich kreuzenden Seilstränge 23, 24 verlagern. Die Achse 570 ist in einer Langlochführung 573 gelagert, die eine entsprechende axiale Bewegung der Achse 570 vorgibt.

Zum Absenken des vorderen Mitnehmers 11 aus der in durchgezogenen Linien dargestellten Position in die in gestrichelten Linien angegebene Position wird die Seilauslenkvorrichtung 57 von der in durchgezogenen Linien dargestellten Position der Seilauslenkelemente 571, 572 in die in gestrichelten Linien dargestellte Position verlagert und damit die sich kreuzenden Seilstränge 23, 24 in die gestrichelt dargestellte Position verschoben.

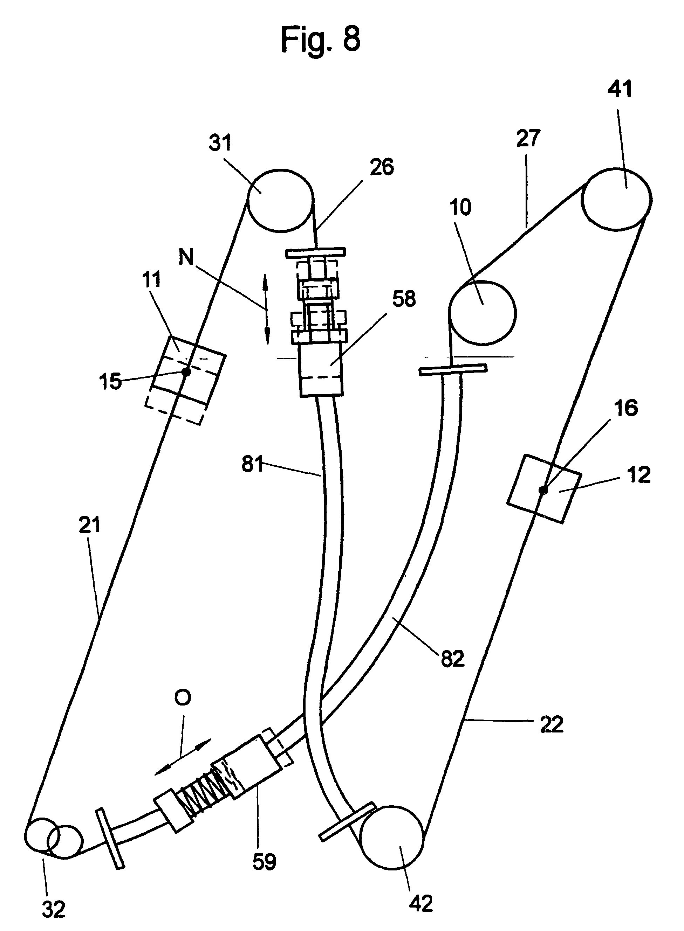

Die in den Figuren 2 bis 7 dargestellten Ausführungsbeispiele betreffen einen offenen doppelsträngigen Seilfensterheber, bei dem die Lageeinstellung einer von dem doppelsträngigen Seilfensterheber bewegten Fensterscheibe durch eine entsprechende gegenläufige Längenänderung der sich kreuzenden Seilstränge 23, 24 bewirkt wird. Der der Erfindung zugrunde liegende Gedanke ist aber auch auf Bowdenzug-Fensterheber anzuwenden wie dies die schematische Darstellung in Figur 8 verdeutlichen soll.

Bei dem in Figur 8 schematisch dargestellten doppelsträngigen Seilfensterheber sind die sich kreuzenden Seilstränge 23, 24 abschnittsweise in Bowdenhüllen 81, 82 angeordnet. An jeweils einem Ende der beiden Bowdenhüllen 81, 82 ist jeweils eine Einrichtung 58, 59 zur Veränderung der Länge der Bowdenhüllen 81, 82 angeordnet, die eine entsprechende gegenläufige Veränderung der Länge der sich kreuzenden Seilstränge 23, 24 bewirken.

Von den beiden Einrichtungen 58, 59 zur Veränderung der Länge der Bowdenhüllen 81, 82 ist die eine Einrichtung 58 als aktives Bauteil ausgebildet, das zur Einstellung der Lage der von dem doppelsträngigen Seilfensterheber bewegten Fensterscheibe aus einer Fixierstellung gelöst und nach der Justage emeut fixiert werden kann. Die andere Einrichtung 59 zur Veränderung der Länge der Bowdenhülle 82 ist als passives, federbelastetes Bauteil ausgebildet, das eine entsprechende Längenänderung aufgrund der sich ändernden Seilspannung bei einer Längenveränderung der ersten Bowdenhülle 81 durch die Einrichtung 58 ausgleicht.

In der Vorrichtung zum Einstellen einer von einem doppelsträngigen Seilfensterheber bewegten Fensterscheibe der Figur 7 befindet sich die Achse 570 der Seilauslenkvorrichtung 57 im wesentlichen parallel zur Verbindungslinie der relativ zur Verstellrichtung der Fensterscheibe unteren vorderen Seilumlenkeinrichtung 32 mit der unteren hinteren Seilumlenkeinrichtung 42. Diese Anordnung der Seilauslenkvorrichtung 57 kann beliebig parallel zu der in Figur 7 dargestellten Ausrichtung bis hin zur Anordnung der Seilauslenkvorrichtung 57 zwischen der oberen vorderen Seilumlenkeinrichtung 31 und der oberen hinteren Seilumlenkeinrichtung 41 verschoben werden.

Figur 8 zeigt in durchgezogenen Linien die Länge der Bowdenhüllen 81, 82 und des vorderen Mitnehmers 11 in einer ersten Position sowie nach einer Verstellung der auf das erste Bowdenhülle 81 einwirkenden Einrichtung 58 in Richtung des Pfeiles N sowie einen entsprechenden Längenausgleich der anderen Einrichtung 59 zur Längenveränderung der zweiten Bowdenhülle 82 in gestrichelten Linien (Doppelpfeil O).
Zum Einstellen der Lage bzw. Ausrichtung einer von einem in den Figuren 2 bis 8 dargestellten doppelsträngigen Seilfensterheber bewegten Fensterscheibe werden die jeweiligen Seilauslenkelemente bzw. Seilauslenkvorrichtungen oder die Einrichtung zur Veränderung der Länge der Bowdenhüllen gelöst und anschließend die Fensterscheibe in die maximale obere Position, d.h. bis zum Anschlag an die obere Kante des Fensterscheibenausschnittes einer Kraftfahrzeugtür oder alternativ in die Anschlagposition einer Justageeinrichtung verfahren. In dieser Lage der oberen Fensterscheibenkante werden die Seilauslenkelemente, Seilauslenkvorrichtungen bzw. Einrichtungen zur Veränderung der Länge der Bowdenhüllen entsprechend justiert, so daß sich die sich kreuzenden Seilstränge 23, 24 in ihrer Länge gegenläufig verändern bzw. die Länge der Bowdenhüllen 81, 82 gegenläufig verändert wird. Nach Beendigung dieser Justage wird die räumliche Lage der Seilauslenkelemente, Seilauslenkvorrichtungen und Einrichtungen zur Veränderung der Länge der Bowdenhüllen fixiert und damit ein paralleler Abzug der Fensterscheibe sichergestellt.

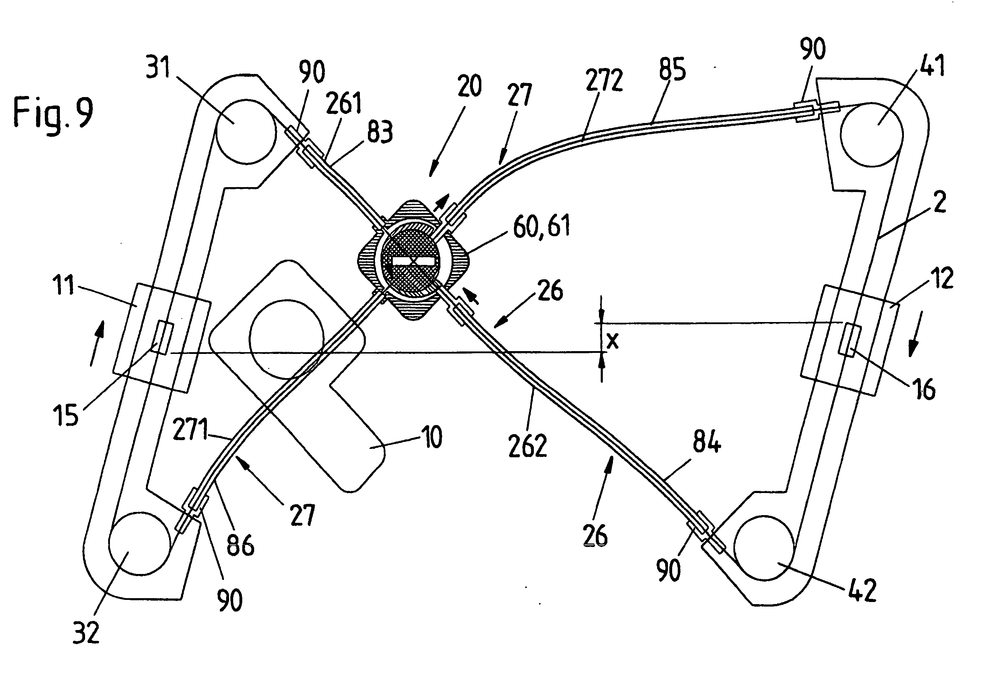

Im Unterschied zur Einstellvorrichtung gemäß Figur 8 weisen die in den Figuren 9 bis 16 schematisch dargestellten Einstellvorrichtungen miteinander gekoppelte Justiereinrichtungen auf, die eine Verlängerung eines der beiden sich kreuzenden Bowdenstränge mit der entsprechenden Verkürzung des anderen Bowdenstranges verbinden. Dabei wird die Länge mindestens einer Bowdenhülle des einen Bowdenstranges entgegengesetzt zur Länge mindestens einer Bowdenhülle des anderen Bowdenstranges verändert, so dass beispielsweise die eine oder beide Bowdenhüllen des durch die Justiereinrichtung unterteilten antriebsseitigen Bowdenstranges verlängert und die Bowdenhülle oder beide Bowdenhüllen des nicht antriebsseitigen Bowdenstranges entsprechend verkürzt werden.

Zu diesem Zweck befindet sich die Justiereinrichtung im Kreuzungspunkt bzw. Bowdenkreuz 20 der sich kreuzenden Bowdenstränge 26, 27, von denen im antriebsseitigen Bowdenstrang 27 der Reversierantrieb 10 angeordnet ist.

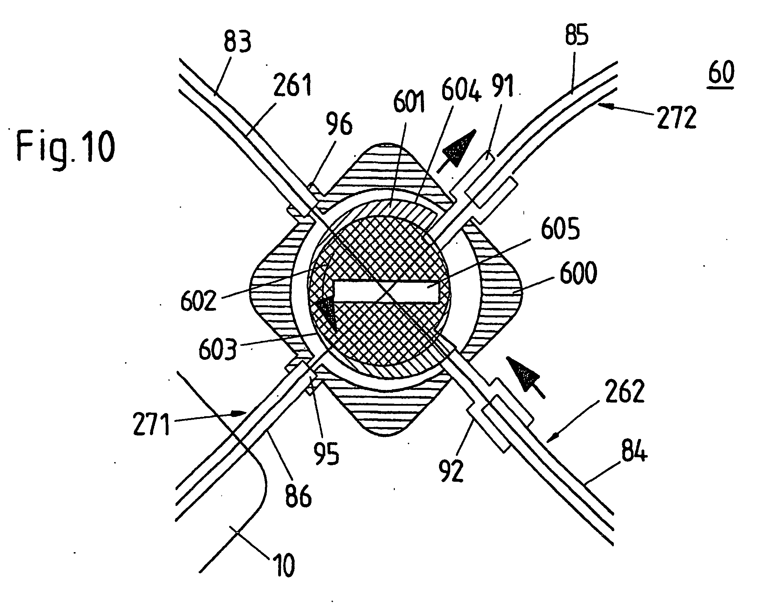

Figur 9 zeigt eine erste, im Bowdenkreuz 20 angeordnete Justiereinrichtung 60 bzw. 61, deren unterschiedlicher Aufbau und Funktion nachfolgend anhand der Figuren 10 bis 12 erläutert wird. Die Justiereinrichtung 60 bzw. 61 ist im Kreuzungspunkt der sich kreuzenden Bowdenstränge 26, 27 angeordnet, die durch die Justiereinrichtung 60 bzw. 61 in Bowdenteilstränge 261, 262 bzw. 271, 272 unterteilt werden und jeweils eine Bowdenhülle 83 bis 86 aufweisen, die über Bowdenaufnahmen 90 mit den Seilumlenkungen 31, 32 bzw. 41, 42 verbunden sind, wo das in den Bowdenhüllen 83 bis 86 geführte, eine geschlossene Schleife bildende Seil 2 umgelenkt und über Seilnippel 15, 16 mit den Mitnehmern 11, 12 verbunden ist, die die nicht dargestellte Fensterscheibe des doppelsträngigen Bowden-Fensterhebers aufnehmen.

Zum Einstellen der Parallelität des Scheibenabzugs wird die Länge der Bowdenhülle 83 bis 86 jeweils eines Bowdenstranges 26, 27 verändert, d. h. verlängert bzw. verkürzt. Zu diesem Zweck können entweder beide Bowdenhüllen 83, 84 bzw. 85, 86 eines Bowdenstranges 26 bzw. 27 oder jeweils eine Bowdenhülle verlängert bzw. verkürzt werden, während die andere Bowdenhülle desselben Bowdenstranges unverändert bleibt.

Die in Figur 9 an die Justiereinrichtung 60 bzw. 61 im Bereich der Bowdenaufnahmen angetragenen Pfeile verdeutlichen die entgegengesetzte Verstellung der Länge der Bowdenhüllen 83 bis 86 in den jeweiligen Bowdensträngen 26, 27 durch Drehen einer Kurvenscheibe der Justiereinrichtung 61 und damit eine entsprechende Anhebung des einen Mitnehmers 11 und Absenkung des anderen Mitnehmers 12 entsprechend den an die Mitnehmer 11, 12 angetragenen Pfeilen, so dass die Parallelitätsabweichung x ausgeglichen wird.

In den Figuren 10 und 11 bzw. 12 sind zwei Varianten der Justiereinrichtung gemäß Figur 9 dargestellt, deren Aufbau und Funktion anhand dieser Figuren nachfolgend näher erläutert wird.

Figur 10 zeigt in vergrößerter, schematischer Darstellung die Justiereinrichtung 60, mit der die Länge jeweils einer Bowdenhülle eines Bowdenstranges der sich kreuzenden Bowdenstränge 26, 27 veränderbar ist, während die andere Bowdenhülle desselben Bowdenstranges unverändert bleibt.

Der antriebsseitige Bowdenstrang 27 wird durch die Justiereinrichtung 60 in antriebsseitige Bowdenteilstränge 271, 272 unterteilt, von denen der eine Bowdenteilstrang 271 eine in ihrer Länge unveränderte Bowdenhülle 86 aufweist, deren Bowdenaufnahme 95 fest mit dem Gehäuse 600 der Justiereinrichtung 60 verbunden ist, während die Länge der anderen Bowdenhülle 85 veränderbar ist. Die Bowdenhülle 85 ist mit einer Bowdenaufnahme 91 verbunden, die durch eine Öffnung im Gehäuse 600 der Justiereinrichtung 60 geführt ist und sich an einer im Querschnitt spiralförmigen Kurvenfläche 603 einer Kurvenscheibe 602 abstützt.

In gleicher Weise ist der nicht antriebsseitige Bowdenstrang 26 durch die Justiereinrichtung 60 in zwei Bowdenteüstränge 261, 262 unterteilt. In dem einen nicht antriebsseitigen Bowdenteilstrang 261 ist ein Bowden mit einer in ihrer Länge unveränderlichen Bowdenhülle 83 vorgesehen, deren Bowdenaufnahme 96 fest mit dem Gehäuse 600 der Justiereinrichtung 60 verbunden ist. Der andere Bowdenteilstrang 262 weist einen Bowden mit einer Bowdenhülle 84 auf, deren Bowdenaufnahme 92 durch eine Öffnung im Gehäuse 600 der Justiereinrichtung 60 geführt ist und sich an der spiralförmigen Kurvenfläche 604 einer Kurvenscheibe 601 abstützt, die in einer unterschiedlichen Ebene zur Kurvenscheibe 602 angeordnet ist.

Die miteinander gekoppelten Kurvenscheiben 601, 602 weisen einen Formschlussbereich 605 zur Aufnahme eines Justierwerkzeuges auf, mit dem eine Drehung der Kurvenscheiben 601, 602 in der einen oder anderen Drehrichtung möglich ist. Werden die miteinander gekoppelten Kurvenscheiben 601, 602 in Richtung des in Figur 10 in die Kurvenscheiben 601, 602 eingetragenen Pfeiles gedreht, so wird durch die Spiralform der Kurvenflächen 603, 604 der Kurvenscheiben 601, 602 die Bowdenaufnahme 91 zur Verkürzung der Bowdenhülle 85 aus dem Gehäuse 600 der Justiereinrichtung 61 herausgedrückt, während die Bowdenaufnahme 92 der Bowdenhülle 84 durch die Vorspannung über eine Feder in das Gehäuse 600 der Justiereinrichtung 60 hineingedrückt wird, so dass sich die Bowdenhülle 84 und damit der nicht antriebsseitige Bowdenstrang 26 gegenüber dem antriebsseitigen Bowdenstrang 27 verlängert.

Durch die sich verändernden Längenverhältnisse der sich kreuzenden Bowdenstränge 26, 27 wird gemäß Figur 9 bewirkt, dass der Mitnehmer 15 angehoben wird, während der Mitnehmer 16 abgesenkt wird.

Dieselbe Wirkung, allerdings mit geringeren Stellwinkeln der Kurvenscheiben kann erzielt werden, wenn die Länge aller Bowdenhüllen 83 bis 86 in den Bowdenteilsträngen 261, 262; 271, 272 der Bowdenstränge 26, 27 veränderbar ist.

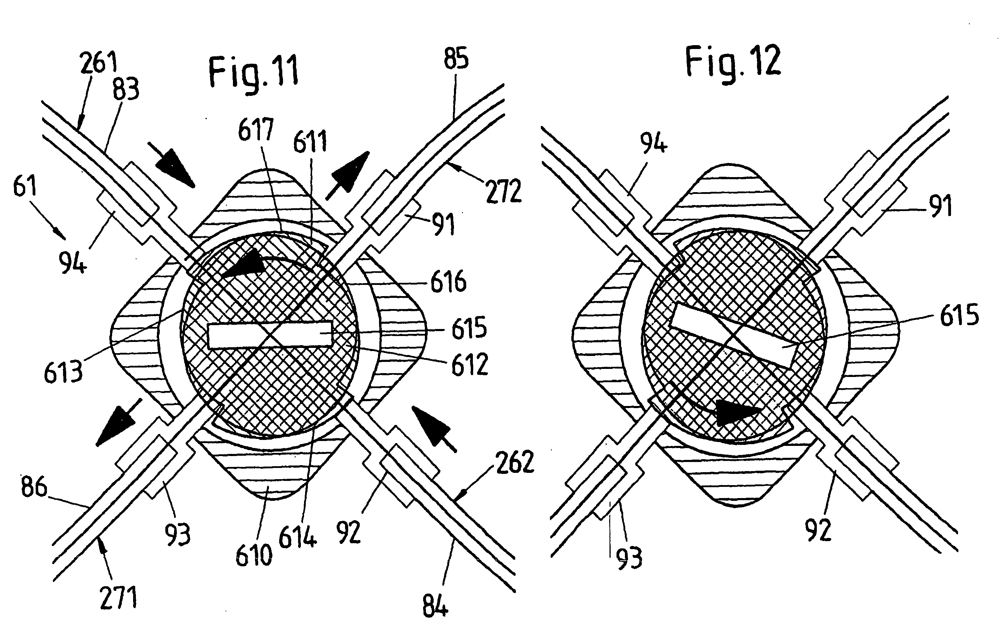

Zu diesem Zweck sind die Bowdenhüllen 83 bis 86 sämtlicher Bowdenteilstränge 261, 262; 271, 272 an ihren mit der Justiereinrichtung 61 gemäß den Figuren 11 und 12 verbundenen Enden mit einer Bowdenaufnahme 91 bis 94 versehen, die durch Öffnungen im Gehäuse 610 der Justiereinrichtung 61 greifen und an in übereinander liegenden Ebenen angeordneten Kurvenscheiben 611, 612 anliegen.

Im Unterschied zu den Kurvenscheiben 601, 602 gemäß Figur 10 weisen die Kurvenscheiben 611, 612 gemäß den Figuren 11 und 12 zwei über 180° verlaufende spiralförmige Kurvenflächen 613, 614 sowie 616, 617 auf, an denen jeweils eine Bowdenaufnahme 91 bis 94 anliegt. Werden die Kurvenscheiben 611, 612 mit einen in den Formschlussbereich 615 eingesetzten Einstellwerkzeug in Richtung des in Figur 11 eingetragenen Pfeiles gedreht, so werden die Bowdenaufnahmen 91, 93 in Richtung der an sie eingetragenen Pfeile aus dem Gehäuse 610 der Justiereinrichtung 61 herausgedrückt, während die Bowdenaufnahmen 92, 94 in Richtung der an sie eingetragenen Pfeile durch Federvorspannung in das Gehäuse 610 der Justiereinrichtung 61 hineingedrückt werden.

Figur 12 zeigt die Veränderung der Bowdenaufnahmen 91 bis 94 nach einer entsprechenden Drehung der Kurvenscheiben 611, 612.

Ein Vergleich der Figuren 10 bis 12 verdeutlicht, dass bei vorgegebener Steigung der Kurvenflächen 603, 604 bzw. 613, 614 und 616, 617 der Kurvenscheiben 601, 602 einerseits und 611, 612 bei der Ausgestaltung der Kurvenscheiben gemäß den Figuren 11 und 12 andererseits mit einem geringeren Verstellwinkel der Kurvenscheiben dieselbe Längenänderung der Bowdenhüllen 83 bis 86 erzielt werden kann.

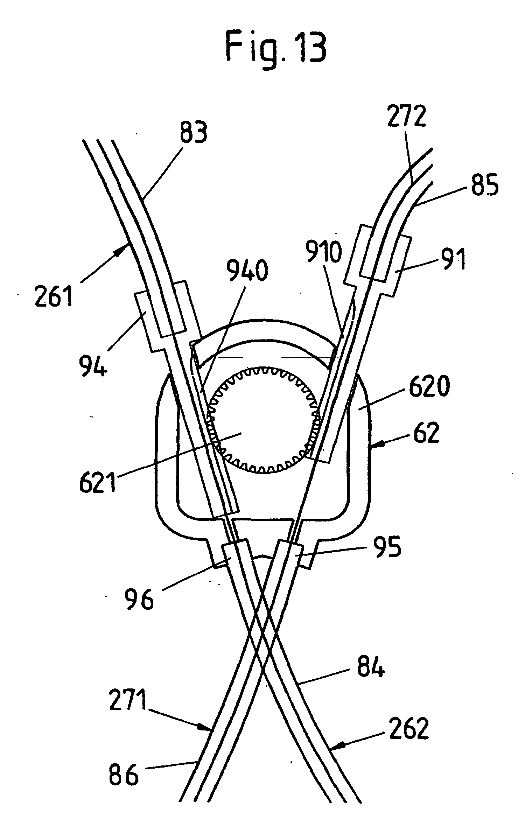

Figur 13 zeigt eine Justiereinrichtung 62 zur gekoppelten Längenverstellung der sich kreuzenden Bowdenstränge 26, 27 mit einem Zahnstangengetriebe, das ein in einem Gehäuse 620 angeordnetes Zahnrad 621 enthält, das mit zwei Zahnstangen 910, 940 in Eingriff steht, die an den Bowdenaufnahmen 91, 94 jeweils eines Bowdenteilstranges 261, 272 der sich kreuzenden Bowdenstränge 26, 27 ausgebildet sind. Die jeweils anderen Bowdenteilstränge 271, 262 sind mit ihren Bowdenaufnahmen 95, 96 fest mit dem Gehäuse 620 des Zahnstangengetriebes verbunden.

Durch eine Drehung des Zahnrades 261 in der einen oder anderen Richtung wird über die Kopplung mit den Zahnstangen 940, 910 die eine Bowdenaufnahme 91 bzw. 94 in das Innere des Gehäuses 620 hineinbewegt, während die jeweils andere Bowdenaufnahme 91 bzw. 94 aus dem Gehäuse 620 der Justiereinrichtung 62 herausgedrückt wird. Auf diese Weise wird die Länge der einen Bowdenhülle 83 bzw. 85 verlängert, während die andere Bowdenhülle 85 bzw. 83 um das gleiche Maß verkürzt wird. Dementsprechend werden entsprechend der schematischen Darstellung gemäß Figur 9 die Mitnehmer 11, 12 nach oben bzw. unten verschoben und damit die Ausrichtung der mit den Mitnehmern 11, 12 verbundenen Fensterscheibe bewirkt.

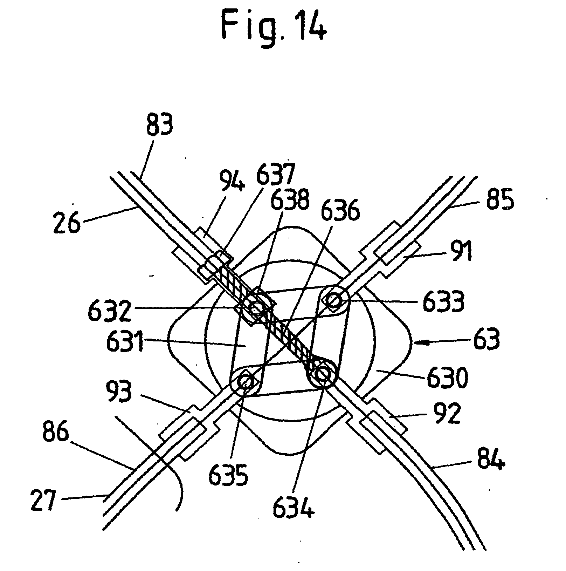

Figur 14 zeigt eine Justiereinrichtung 63, die als Parallelogramm-Hebelgetriebe ausgebildet ist. Das Parallelogramm-Hebelgetriebe besteht aus vier über Gelenke 632 bis 635 miteinander verbundenen Hebelarmen 631. Die Gelenke 632 bis 635 sind mit den Bowdenaufnahmen 91 bis 94 der Bowdenhüllen 83 bis 86 der sich kreuzenden Bowdenstränge 26, 27 verbunden und in einem Gehäuse 630 der Justiereinrichtung 63 angeordnet. Mittels eines Spindelantriebs 636, 637, 638 wird das Parallelogramm-Hebelgetriebe nach Art eines Scheren-Wagenhebers verstellt, so dass die Gelenke 632, 634 bzw. 633, 635 gegenläufig zueinander bewegt oder voneinander entfernt werden.

Das Spindelgetriebe weist eine Spindel 636 auf, die über einen Antriebskopf 637 gedreht wird und mit einer Spindelmutter 638 in Eingriff steht, die mit einem der Gelenke 632 bis 635 - in dem dargestellten Ausführungsbeispiel mit dem Gelenk 632 - verbunden ist, so dass eine Drehung des Antriebskopfes 637 in der einen oder anderen Drehrichtung eine entsprechende Konfigurationsänderung des Parallelogramm-Hebelgetriebes bewirkt.

Analog zu den vorstehend beschriebenen Ausführungsbeispielen wird durch die Längenveränderung der Bowdenhülle 83 bis 86 der sich kreuzenden Bowdenstränge 26, 27 ein Anheben bzw. Absenken des einen oder anderen Mitnehmers 11, 12 des Fensterhebers bewirkt.

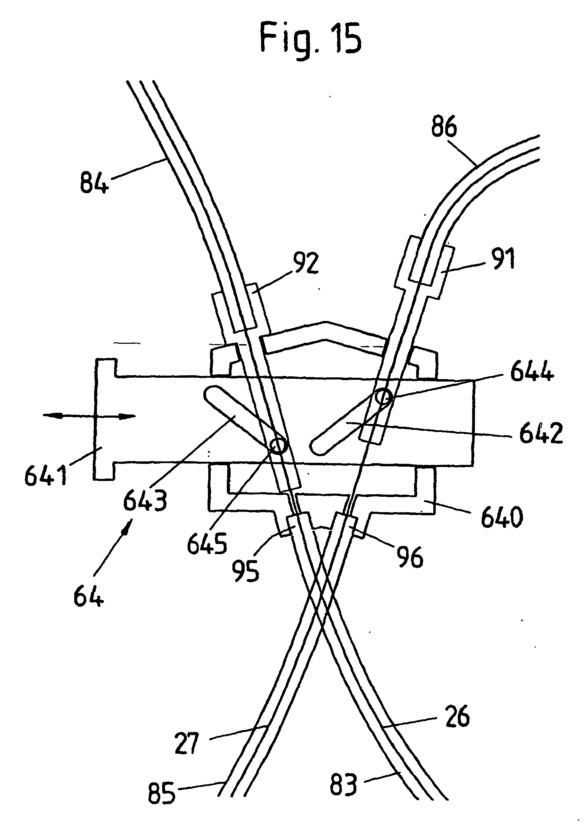

Die in Figur 15 schematisch dargestellte Justiereinrichtung 64 weist einen im Bowdenkreuz der sich kreuzenden Bowdenstränge 26, 27 in einem Gehäuse 640 angeordneten Schieber 641 auf, der in Richtung des an den Schieber 641 angetragenen Doppelpfeiles verstellbar ist. Der Schieber 641 weist Kulissen 642, 643 mit einander entgegengesetzter Neigung in Bezug auf die Verschieberichtung des Schiebers 641 auf, in denen Zapfen 644, 645 lagern, die mit den Bowdenaufnahmen 91, 92 der Bowdenhüllen 84, 86 in den sich kreuzenden Bowdensträngen 26, 27 verbunden sind. Die jeweils anderen Bowdenhüllen 83, 85 der sich kreuzenden Bowdenstränge 26, 27 sind über ihre Enden bzw. Bowdenaufnahmen 95, 96 fest mit dem Gehäuse 640 der Justiereinrichtung 64 verbunden.

Durch Verschieben des Schiebers 641 in der einen oder anderen Pfeilrichtung werden die mit den Bowdenaufnahmen 91, 92 verbundenen Zapfen 644, 645 durch die Zwangsführung in den Kulissen 642, 643 im Sinne einer Verringerung oder Vergrößerung des Abstandes der Bowdenaufnahmen 91, 92 in Bezug auf die jeweils anderen Bowdenaufnahmen 95, 96 der anderen Bowdenhüllen 83, 85 der jeweiligen Bowdenstränge 26, 27 verschoben, woraus eine entsprechende Verlängerung oder Verkürzung der Bowdenstränge 26, 27 mit einer entsprechenden Verlagerung der Mitnehmer 11, 12 resultiert.

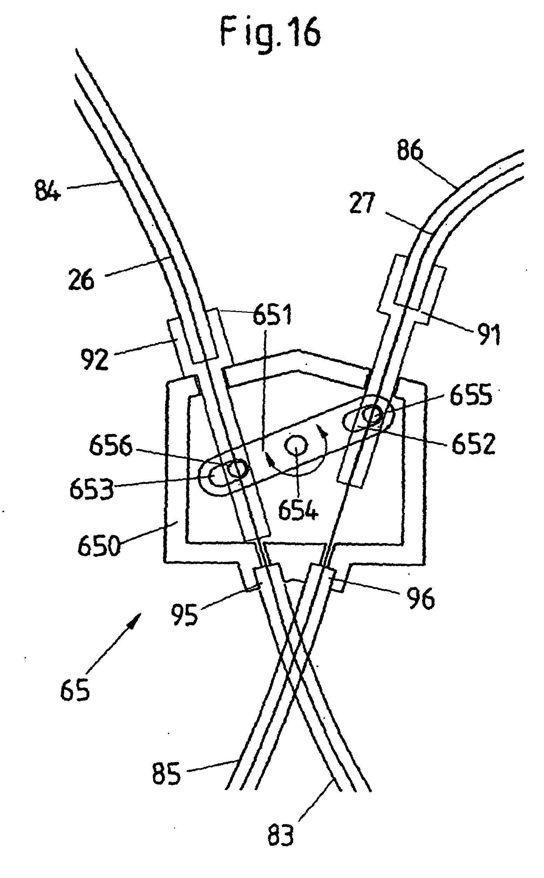

Die Ausführungsform der Justiereinrichtung 65 gemäß Figur 16 entspricht im Wesentlichen der Justiereinrichtung 64 gemäß Figur 15 mit der Maßgabe, dass die Justiereinrichtung 65 einen in einem Gehäuse 650 angeordneten drehbaren Hebel 651 aufweist, der um eine Achse 654 drehbar ist. In dem drehbaren Hebel 651 sind Ausgleichskulissen 652, 653 vorgesehen, in denen mit den Bowdenaufnahmen 91, 92 verbundene Zapfen 655, 656 angeordnet sind.

Wird der drehbare Hebel 651 in der einen oder anderen Richtung um die Achse 654 gedreht, so werden die in den Ausgleichskulissen 652, 653 angeordneten Zapfen 655, 656 und damit die mit ihnen verbundenen Bowdenaufnahmen 91, 92 verlagert, so dass in Bezug auf die Gehäuse-Durchtrittsöffnungen der Bowdenaufnahmen 91, 92 bzw. in Bezug auf die fest mit dem Gehäuse 650 verbundenen Aufnahmen 95, 96 der jeweils anderen Bowdenhüllen 83, 85 die Länge der sich kreuzenden Bowdenstränge 26, 27 verändert wird.

## Patentansprüche

1. Vorrichtung zum Einstellen einer von einem doppelsträngigen Seilfensterheber bewegten Fensterscheibe eines Kraftfahrzeugs mit zwei entlang der Verstellrichtung der Fensterscheibe angeordneten relativ zur Fahrtrichtung des Kraftfahrzeuges vorderen Seilumlenkeinrichtungen, zwei entlang der Verstellrichtung der Fensterscheibe angeordneten relativ zur Fahrtrichtung des Kraftfahrzeuges hinteren Seilumlenkeinrichtungen, einem antreibbaren Seil, das sich zwischen den beiden vorderen und hinteren Seilumlenkeinrichtungen entlang der Verstellrichtung der Fensterscheibe und im Bereich zwischen den vorderen Seilumlenkeinrichtungen und den hinteren Seilumlenkeinrichtungen in zwei sich kreuzenden Seilsträngen erstreckt, deren Länge gegenläufig zueinander durch Mittel zur Verlängerung eines der beiden sich kreuzenden Seilstränge um eine einstellbare Länge und zur Verkürzung des jeweils anderen der beiden sich kreuzenden Seilstränge um die im wesentlichen gleiche einstellbare Länge veränderbar ist und mindestens einem mit der Fensterscheibe und durch das Seil entlang der Verstellrichtung der Fensterscheibe bewegbaren Mitnehmer,
**dadurch gekennzeichnet,**
**dass** der Seilfensterheber eine mindestens abschnittsweise offene Seilführung aufweist und die Mittel zur Veränderung der Länge der sich kreuzenden Seilstränge (23, 24) an der offenen Seilführung als Seilauslenkelemente angeordnet sind, die zu einer Seilauslenkvorrichtung (53 - 57) gekoppelt ausgebildet sind, die bei Verlängerung eines der beiden kreuzenden Seilstränge (23, 24) um eine einstellbare Länge den jeweils anderen Seilstrang (24, 23) um die im wesentlichen gleiche Länge verkürzt.

2. Vorrichtung nach Anspruch 1, **dadurch gekennzeichnet, dass** die Seilauslenkvorrichtung (53 - 57) translatorisch und/oder rotatorisch justierbar ausgebildet ist.

3. Vorrichtung nach einem der Anspruch 1 oder 2, **dadurch gekennzeichnet, dass** die Seilauslenkvorrichtung (53 - 56) von einer ersten Position (C, E, G, I, I') in eine zweite Position (D, F, H, K, K') verschwenkbar ist.

4. Vorrichtung nach Anspruch 3, **dadurch gekennzeichnet, dass** die Seilauslenkvorrichtung (51, 52) mit mindestens einer vorderen und hinteren Seilumlenkeinrichtung (31, 32; 41, 42) als Mittel zur Veränderung der Lage der sich kreuzenden Seilstränge (23, 24) ausgebildet ist.

5. Vorrichtung nach Anspruch 4, **dadurch gekennzeichnet, dass** die Seilauslenkvorrichtung (51, 52) eine schwenkbare Traverse (51) aufweist, deren Enden mit den Seilumlenkeinrichtungen (31, 32; 41, 42) verbunden sind und deren Neigung mit einer arretierbaren Stelleinrichtung (52) einstellbar ist.

6. Vorrichtung nach Anspruch 3, **dadurch gekennzeichnet, dass** die Seilauslenkvorrichtung (53 - 56) im Bereich der Kreuzung (25) der beiden sich kreuzenden Seilstränge (23, 24) angeordnet ist.

7. Vorrichtung nach Anspruch 6, **dadurch gekennzeichnet, dass** die Seilauslenkvorrichtung (53 - 56) auf einer annähernd kreisförmigen Bahn von der ersten Position (C, E, G, I, I') in die zweite Position (D, F, H, K, K') verschwenkbar ist.

8. Vorrichtung nach Anspruch 7, **dadurch gekennzeichnet, dass** die Seilauslenkvorrichtung als Doppelseilrolle (53 - 55) ausgebildet ist, die mit beiden sich kreuzenden Seilsträngen (23, 24) in Wirkverbindung steht, wobei die beiden sich kreuzenden Seilstränge (23, 24) axial entlang der Drehachse der Doppelseilrolle (53 - 55) beabstandet zueinander angeordnet sind.

9. Vorrichtung nach Anspruch 8, **dadurch gekennzeichnet, dass** die Doppelseilrolle (55) im Bereich einer vorderen oder hinteren Seilumlenkeinrichtung (31, 32; 41, 42) angeordnet ist.

10. Vorrichtung nach Anspruch 8, **dadurch gekennzeichnet, dass** in mindestens einem der beiden sich kreuzenden Seilstränge (23, 24) mindestens eine zusätzliche Seilumlenkeinrichtung (71, 72) angeordnet ist, die die räumliche Lage des Kreuzungspunktes (25) der beiden sich kreuzenden Seilstränge (23, 24) beeinflusst.

11. Vorrichtung nach Anspruch 7, **dadurch gekennzeichnet, dass** die Seilauslenkvorrichtung (56) mindestens zwei auf einer um ihre Achse (563) drehbare Kreisscheibe (560) angeordnete Seilauslenkelemente (561, 562) umfasst, wobei mindestens eines der Seilauslenkelemente (561, 562) an einem der beiden sich kreuzenden Seilstränge (23, 24) anliegt.

12. Vorrichtung nach Anspruch 11, **dadurch gekennzeichnet, dass** die Seilauslenkvorrichtung (56) durch Rotation der Kreisscheibe (560) von der ersten Position (I, I') in die zweite Position (K, K') verschwenkbar ist.

13. Vorrichtung nach Anspruch 2, **dadurch gekennzeichnet, dass** die Seilauslenkvorrichtung (57) zwei entlang einer Achse (570) miteinander gekoppelte Seilaustenkelemente (571, 572) umfasst, die jeweils einen der beiden sich kreuzenden Seilstränge (23, 24) auslenken und dass die Seilauslenkvorrichtung (57) entlang der Achse (570) verschiebbar angeordnet ist.

14. Vorrichtung nach Anspruch 13, **dadurch gekennzeichnet, dass** die Achse (570) im wesentlichen parallel zur Verbindungslinie der relativ zur Verstellrichtung der Fensterscheibe unteren vorderen Seilumlenkeinrichtung (32) mit der unteren hinteren Seilumlenkeinrichtung (42) angeordnet ist.

15. Vorrichtung nach Anspruch 14, **dadurch gekennzeichnet, dass** die Seilauslenkvorrichtung (57) zwischen der unteren vorderen Seilumlenkeinrichtung (32) und der unteren hinteren Seilumlenkeinrichtung (42) angeordnet ist.

16. Vorrichtung nach Anspruch 14, **dadurch gekennzeichnet, dass** die Seilauslenkvorrichtung (57) zwischen der oberen vorderen Seilumlenkeinrichtung (31) und der oberen hinteren Seilumlenkeinrichtung (41) angeordnet ist.

17. Vorrichtung zum Einstellen einer von einem doppelsträngigen Seilfensterheber bewegten Fensterscheibe eines Kraftfahrzeugs mit zwei entlang der Verstellrichtung der Fensterscheibe angeordneten relativ zur Fahrtrichtung des Kraftfahrzeuges vorderen Seilumlenkeinrichtungen, zwei entlang der Verstellrichtung der Fensterscheibe angeordneten relativ zur Fahrtrichtung des Kraftfahrzeuges hinteren Seilumlenkeinrichtungen, einem antreibbaren Seil, das sich zwischen den beiden vorderen und hinteren Seilumlenkeinrichtungen entlang der Verstellrichtung der Fensterscheibe und im Bereich zwischen den vorderen Seilumlenkeinrichtungen und den hinteren Seilumlenkeinrichtungen in zwei sich kreuzenden Seilsträngen erstreckt, deren Länge gegenläufig zueinander durch Mittel zur Verlängerung eines der beiden sich kreuzenden Seilstränge um eine einstellbare Länge und zur Verkürzung des jeweils anderen der beiden sich kreuzenden Seilstränge um die im wesentlichen gleiche einstellbare Länge veränderbar ist und mindestens einem mit der Fensterscheibe und durch das Seil entlang der Verstellrichtung der Fensterscheibe bewegbaren Mitnehmer,
**dadurch gekennzeichnet,**
**dass** die sich kreuzenden Seilstränge aus Bowdensträngen (26, 27) bestehen, die zumindest abschnittsweise in Bowdenhüllen (81 - 86) angeordnet sind und dass die Mittel zum Verändern der Länge der sich kreuzenden Bowdenstränge (26, 27) aus Justiereinrichtungen (58 - 65) zum Verändern der Länge der Bowdenhüllen (81 - 86) bestehen.

18. Vorrichtung nach Anspruch 17, **dadurch gekennzeichnet, dass** die Länge der Bowdenhüllen (81 bzw. 82) zwischen den mit den Mitnehmern (11, 12) verbundenen Bowdenzugnippeln (15, 16) des einen Bowdenstranges (26 bzw. 27) um ein vorgebbares Maß verlängert und die Länge der Bowdenhülle (82 bzw. 81) zwischen den mit den Mitnehmern (11, 12) verbundenen Bowdenzugnippeln (15, 16) des anderen Bowdenstranges (27 bzw. 26) um ein gleiches Maß verkürzt wird.

19. Vorrichtung nach Anspruch 18, **dadurch gekennzeichnet, dass** die Justiereinrichtungen (58, 59) die Länge der Bowdenhüllen (81, 82) unabhängig von einander translatorisch und/oder rotatorisch einstellen und im Bereich zwischen den vorderen und hinteren Seilumlenkeinrichtungen (31, 32; 41, 42) angeordnet sind.

20. Vorrichtung nach Anspruch 18, **dadurch gekennzeichnet, dass** die Justiereinrichtungen (60 - 65) zum Verändern der Länge der Bowdenhüllen (83 - 86) miteinander gekoppelt sind, so dass bei einer Verlängerung eines der beiden sich kreuzenden Bowdenstränge (26, 27) um eine einstellbare Länge der jeweils andere Bowdenstrang (27, 26) um die im Wesentlichen gleiche Länge verkürzt wird.

21. Vorrichtung nach Anspruch 20, **dadurch gekennzeichnet, dass** die Justiereinrichtungen (60 - 65) zum Verändern der Länge der Bowdenhüllen (83 - 86) im Kreuzungsbereich (20) der sich kreuzenden Bowdenstränge (26, 27) angeordnet sind und die Länge mindestens einer Bowdenhülle (85, 86) im antriebsseitigen Bowdenstrang (27) entgegengesetzt zur Länge mindestens einer Bowdenhülle (83, 84) im nichtantriebsseitigen Bowdenstrang (26) verändern.

22. Vorrichtung nach Anspruch 21, **gekennzeichnet durch** eine Justiereinrichtung (60, 61) mit winkelverstellbaren Kurvenscheiben (601, 602; 611, 612), an denen Bowdenaufnahmen (91 - 94) der Bowdenstränge (26, 27) anliegen.

23. Vorrichtung nach Anspruch 22, **dadurch gekennzeichnet, dass** die winkelverstellbaren Kurvenscheiben (601, 602) in zwei übereinander liegenden Ebenen angeordnet sind und spiralförmige Kurvenflächen (603, 604) aufweisen, an denen die mit Bowdenhüllen (84, 85) verbundenen Bowdenaufnahmen (91, 92) jeweils eines Bowdenteilstranges (262, 272) anliegen, während die Bowdenhüllen (83, 86) der jeweils anderen Bowdenteilstränge (261, 271) über Aufnahmen (95, 96) unmittelbar mit dem Gehäuse (600) der Justiereinrichtung (60) verbunden sind.

24. Vorrichtung nach Anspruch 22, **dadurch gekennzeichnet, dass** die winkelverstellbaren Kurvenscheiben (611, 612) in zwei übereinander liegenden Ebenen angeordnet sind und spiralförmige Kurvenflächen (613, 614, 616, 617) aufweisen, an denen die mit Bowdenhüllen (83 - 86) verbundenen Bowdenaufnahmen (91 - 94) der Bowdenteilstränge (261, 262; 271, 272) anliegen.

25. Vorrichtung nach mindestens einem der voranstehenden Ansprüche 22 bis 24, **dadurch gekennzeichnet, dass** die Justiereinrichtung (60, 61) einen Formschlussbereich (605, 615) zur Aufnahme eines Justierwerkzeuges aufweist.

26. Vorrichtung nach Anspruch 21, **dadurch gekennzeichnet, dass** die Justiereinrichtung (62) ein Zahnrad (621) aufweist, das mit zwei Zahnstangen (910, 940) kämmt, die mit Bowdenteilsträngen (261, 272) der beiden sich kreuzenden Bowdenstränge (26, 27) verbunden sind, die zwischen der Justiereinrichtung (62) und den oberen oder unteren Seilumlenkeinrichtungen angeordnet sind.

27. Vorrichtung nach Anspruch 26, **dadurch gekennzeichnet, dass** die Zahnstangen (910, 940) mit den Bowdenaufnahmen (91, 94) der Bowdenteilstränge (261, 272) verbunden oder an den Bowdenaufnahmen (91, 94) angeformt sind.

28. Vorrichtung nach Anspruch 21, **dadurch gekennzeichnet, dass** die Justiereinrichtung (63) aus einem Parallelogramm-Hebelgetriebe besteht, dessen einander gegenüber liegende Gelenke (632 - 635) mit den Bowdenaufnahmen (91 - 94) der Bowdenstränge (26, 27) verbunden sind.

29. Vorrichtung nach Anspruch 28, **gekennzeichnet durch** eine Spindelverstellung (636 - 638) zur Einstellung des Abstandes der einander gegenüber liegenden Gelenke (632 - 635) des Parallelogramm-Hebelgetriebes.

30. Vorrichtung nach Anspruch 21, **dadurch gekennzeichnet, dass** die Justiereinrichtung (64) aus einem Schieber (641) mit Kulissen (642, 643) mit in Bezug auf dessen Verschieberichtung einander entgegengesetzter Neigung besteht und dass zwei mit Bowdenaufnahmen (91, 92) jeweils einer Bowdenhülle (84, 86) der sich kreuzenden Bowdenstränge (26, 27) verbundene Zapfen (644, 645) in den Kulissen (642, 643) gelagert sind.

31. Vorrichtung nach Anspruch 21, **dadurch gekennzeichnet, dass** die Justiereinrichtung (65) einen um eine Achse (654) drehbaren Hebel (651) aufweist, der zwei an entgegengesetzten Enden vorgesehene Kulissen (652, 653) enthält, in die mit den Bowdenaufnahmen (91, 92) zweier Bowdenhüllen (84, 86) der sich kreuzenden Bowdenstränge (26, 27) verbundene Zapfen (655, 656) eingreifen.

## Claims

1. Device for adjusting a window pane moved by a double stranded cable window lifter in a motor vehicle with two front cable turning devices mounted along the adjusting direction of the window pane relative to the driving direction of the motor vehicle, two rear cable turning devices mounted along the adjusting direction of the window pane relative to the driving direction of the motor vehicle, a drivable cable which extends between the two front and rear cable turning devices along the adjusting direction of the window pane and in the region between the front cable turning devices and the rear cable turning devices into two crossing cable strands whose length can be changed oppositely to each other through means for lengthening one of the two crossed cable strands by an adjustable length and for shortening the relevant other of the two crossed cable strands by substantially the same adjustable length and at least one follower which can be moved with the window pane and through the cable along the adjusting direction of the window pane,
**characterised in that**
the cable window lifter has a cable guide which is open at least in some sections and the means for changing the length of the crossed cable strands (23, 24) are mounted at the open cable guide as cable deflection elements which are designed coupled into one cable deflection device (53 - 57) which when one of the two crossed cable strands (23, 24) lengthens by an adjustable length shortens the relevant other cable strand (24, 23) by substantially the same length.

2. Device according to claim 1, **characterised in that** the cable deflection device (53-57) is designed to be adjustable in translation and/or rotation.

3. Device according to one of claims 1 or 2, **characterised in that** the cable deflection device (53-56) can be swivelled from a first position (C, E, G, I, I') into a second position (D, F, H, K, K').

4. Device according to claim 3, **characterised in that** the cable deflection device (51, 52) is formed with at least one front and rear cable turning device (31, 32; 41, 42) as means for changing the position of the crossed cable strands (23, 24).

5. Device according to claim 4, **characterised in that** the cable deflection device (51, 52) has a swivel cross bar (51) whose ends are connected to the cable turning devices (31, 32; 41, 42) and whose incline can be adjusted with a lockable setting device (52).

6. Device according to claim 3, **characterised in that** the cable deflection device (53-56) is mounted in the region of the cross-over (25) of the two crossed cable strands (23, 24).

7. Device according to claim 6, **characterised in that** the cable deflection device (53-56) can swivel on an approximately circular path from a first position (C, E, G, I, I') into a second position (D, F, H, K, K').

8. Device according to claim 7, **characterised in that** the cable deflection device is designed as a double cable roller (53 - 55) which is in active connection with two crossed cable strands (23, 24) whereby the two crossed cable strands (23, 24) are mounted axially spaced from each other along the rotational axis of the double cable roller (53-55).

9. Device according to claim 8, **characterised in that** the double cable roller (55) is mounted in the region of a front or rear cable turning device (31, 32; 41, 42).

10. Device according to claim 8, **characterised in that** in at least one of the two crossed cable strands (23, 24) is at least an additional cable turning device (71, 72) which influences the spatial position of the cross-over point (25) of the two crossed cable strands (23, 24).

11. Device according to claim 7, **characterised in that** the cable deflection device (56) comprises at least two cable deflection elements (561, 562) mounted on a circular disc (560) rotatable about its axis (563) whereby at least one of the cable deflection elements (561, 562) bears against one of the two crossed cable strands (23, 24).

12. Device according to claim 11, **characterised in that** the cable deflection device (56) can swivel by rotating the circular disc (560) from a first position (1. 1') into the second position (K, K').

13. Device according to claim 2, **characterised in that** the cable deflection device (57) comprises two cable deflection elements (571, 572) coupled together along an axis (570) and each deflecting one of the two crossed cable strands (23, 24) and that the cable deflection device (57) is mounted displaceable along the axis (570).

14. Device according to claim 13, **characterised in that** the axis (570) is mounted substantially parallel to the connecting line of the lower front cable deflection device (32), relative to the adjusting direction of the window pane, with the lower rear cable turning device (42).

15. Device according to claim 14, **characterised in that** the cable deflection device (57) is mounted between the lower front cable turning device (32) and the lower rear cable turning device (42).

16. Device according to claim 14, **characterised in that** the cable deflection device (57) is mounted between the upper front cable turning device (31) and the upper rear cable turning device (41).

17. Device for adjusting a window pane moved by a double stranded cable window lifter in a motor vehicle with two front cable turning devices mounted along the adjusting direction of the window pane relative to the driving direction of the motor vehicle, two rear cable turning devices mounted along the adjusting direction of the window pane relative to the driving direction of the motor vehicle, a drivable cable which extends between the two front and rear cable turning devices along the adjusting direction of the window pane and in the region between the front cable turning devices and the rear cable turning devices into two crossed cable strands whose length can be changed oppositely to each other through means for lengthening one of the two crossed cable stands by an adjustable length and for shortening the relevant other of the two crossed cable strands by substantially the same adjustable length and at least one follower which can be moved with the window pane and through the cable along the adjusting direction of the window pane,
**characterised in that**
the crossed cable strands consist of Bowden cables (26, 27) which are mounted at least in some sections in Bowden sheaths (81-86) and that the means for changing the length of the crossed Bowden cables (26,27) consist of adjusting devices (58 - 65) for changing the length of the Bowden sheaths (81- 86).

18. Device according to claim 17, **characterised in that** the length of the Bowden sheaths (81 and 82) between the Bowden cable nipples (15, 16) of the one Bowden cable (26, 27) connected to the followers (11, 12) is lengthened by a predeterminable amount and the length of the Bowden sheath (82 or 81) between the Bowden cable nipples (15,16) of the other Bowden cable (27 or 26) connected to the followers (11, 12) is shortened by the same amount.

19. Device according to claim 18, **characterised in that** the adjusting devices (58, 59) adjust the length of the Bowden sheaths (81, 82) independently of each other in translation and/or rotation and are mounted in the region between the front and rear cable turning devices (31, 32; 41, 42).

20. Device according to claim 18, **characterised in that** the adjusting devices (60 - 65) for changing the length of the Bowden sheaths (83 - 86) are coupled together so that during lengthening of one of the two crossed Bowden cables (26, 27) by an adjustable length each other Bowden cable (27, 26) is shortened by substantially the same length.

21. Device according to claim 20, **characterised in that** the adjusting devices (60 - 65) for changing the length of the Bowden sheaths (83 - 86) are mounted in the crossing region (20) of the crossed Bowden cables (26, 27) and change the length of at least one Bowden sheath (85, 68) in the drive side Bowden cable (27) oppositely to the length of at least one Bowden sheath (83, 84) in the nondrive side Bowden cable (26).

22. Device according to claim 21, **characterised by** an adjusting device (60, 61) with angular adjustable cam plates (601, 602; 611, 612) which are adjoined by Bowden sockets (91-94) of the Bowden cables (26, 27).

23. Device according to claim 22, **characterised in that** the angular adjustable cam plates (601, 602) are arranged in two superposed planes and have spiral shaped curved faces (603, 604) adjoined by the Bowden sockets (91, 92) of each one Bowden cable part (262, 272) connected to Bowden sheaths (84, 85) whilst the Bowden sheaths (83, 86) of each other Bowden cable part (261, 271) are connected directly to the housing (600) of the adjusting device (60) through sockets (95, 96).

24. Device according to claim 22, **characterised in that** the angular adjustable cam plates (611, 612) are mounted in two superposed planes and have spiral shaped curved faces (613, 614, 616, 617) adjoined by the Bowden sockets (91-94) of the Bowden cable parts (261, 262; 271,272) connected to the Bowden sheaths (83-86).

25. Device according to at least one of the preceding claims 22 to 24, **characterised in that** the adjusting device (60, 61) has a positive locking region (605, 615) for receiving an adjusting tool..

26. Device according to claim 21, **characterised in that** the adjusting device (62) has a toothed wheel (621) which meshes with two toothed rods (910, 940) which are connected to Bowden cable parts (261, 272) of the two crossed Bowden cables (26, 27) which are mounted between the adjusting device (62) and the upper or lower cable turning devices.

27. Device according to claim 26, **characterised in that** the toothed rods (910, 940) are connected to the Bowden sockets (91, 94) of the Bowden cable parts (261, 272) or are moulded on the Bowden sockets (91, 94).

28. Device according to claim 21, **characterised in that** the adjusting device (63) consists of a parallelogram lever gearing whose opposing articulated joints (632-635) are connected to the Bowden sockets (91-94) of the Bowden cables (26, 27).

29. Device according to claim 28, **characterised by** a spindle adjustment (636-638) for adjusting the distance of the opposing joints (632-635) of the parallelogram lever gearing.

30. Device according to claim 21, **characterised in that** the adjusting device (64) consists of a slider (641) with slides (642, 643) with opposite incline in relation to its sliding direction and that two pivots (644, 645) connected to Bowden sockets (91, 92) of each one Bowden sheath (84, 86) of the crossed Bowden cables (26, 27) are mounted in the slides (642, 643).

31. Device according to claim 21, **characterised in that** the adjusting device (65) has a lever (651) rotatable about an axis (654) which contains two slides (652, 653) at opposite ends in which engage the pivots (655, 656) which are connected to the Bowden sockets (91, 92) of two Bowden sheaths (84, 86) of the crossed Bowden cables (26, 27).

## Revendications

1. Dispositif pour régler une vitre de véhicule automobile déplacée par un lève-vitre à câble double brin, comportant deux dispositifs de renvoi de câble antérieurs, par rapport à la direction de circulation du véhicule automobile, agencés suivant la direction de déplacement de la vitre, deux dispositifs de renvoi de câble postérieurs, par rapport à la direction de circulation du véhicule automobile, agencés suivant la direction de déplacement de la vitre, un câble susceptible d'être entraîné et s'étendant en deux brins de câble en croix entre les deux dispositifs de renvoi de câble antérieurs et postérieurs suivant la direction de déplacement de la vitre et dans la zone entre les dispositifs de renvoi de câble antérieurs et les dispositifs de renvoi de câble postérieurs, dont les longueurs sont modifiables en sens opposés l'une à l'autre par des moyens pour allonger l'un des brins de câble en croix d'une longueur réglable, et pour raccourcir l'autre des deux brins de câble en croix sensiblement de la même longueur réglable, et comportant au moins un entraîneur mobile avec la vitre et par le câble suivant la direction de déplacement de la vitre,
**caractérisé en ce que**
le lève-vitre à câble comprend un guidage de câble ouvert au moins par tronçons, et les moyens pour modifier la longueur des brins de câble en croix (23, 24) sont agencés sous forme d'éléments de déviation de câble au niveau du guidage de câble ouvert, qui sont réalisés en étant couplés à un dispositif de déviation de câble (53 - 57) qui, lors d'un allongement de l'un des deux brins de câble en croix (23, 24) d'une longueur réglable, raccourcit l'autre brin de câble respectif (24, 23) sensiblement de la même longueur.

2. Dispositif selon la revendication 1, **caractérisé en ce que** le dispositif de déviation de câble (53 - 57) est réalisé ajustable par translation et/ou par rotation.

3. Dispositif selon l'une des revendications 1 ou 2, **caractérisé en ce que** le dispositif de déviation de câble (53 - 56) est susceptible de pivoter d'une première position (C, E, G, I, I') dans une seconde position (D, F, H, K, K').

4. Dispositif selon la revendication 3, **caractérisé en ce que** le dispositif de déviation de câble (51, 52) est réalisé avec au moins un dispositif de renvoi de câble antérieur et au moins un dispositif de renvoi de câble postérieur (31, 32 ; 41, 42) à titre de moyens pour modifier la position des brins de câble en croix (23, 24).

5. Dispositif selon la revendication 4, **caractérisé en ce que** le dispositif de déviation de câble (51, 52) comprend une traverse pivotante (51) dont les extrémités sont reliés aux dispositifs de renvoi de câble (31, 32 ; 41, 42) et dont l'inclinaison est réglable au moyen d'un dispositif de positionnement (52) susceptible d'être arrêté.

6. Dispositif selon la revendication 3, **caractérisé en ce que** le dispositif de déviation de câble (53 - 56) est agencé dans la zone du croisement (25) des deux brins de câble en croix (23, 24).

7. Dispositif selon la revendication 6, **caractérisé en ce que** le dispositif de déviation de câble (53 - 56) est mobile en pivotement depuis la première position (C, E, G, I, I') dans une seconde position (D, F, H, K, K') sur une trajectoire approximativement circulaire.

8. Dispositif selon la revendication 7, **caractérisé en ce que** le dispositif de déviation de câble est réalisé sous forme de poulie double (53 - 55) qui est en liaison d'action avec les deux brins de câble en croix (23, 24), les deux brins de câble en croix (23, 24) étant agencés à distance l'un de l'autre axialement suivant l'axe de rotation de la poulie double (53 - 55).

9. Dispositif selon la revendication 8, **caractérisé en ce que** la poulie double (55) est agencée dans la zone d'un dispositif de renvoi de câble antérieur ou postérieur (31, 32 ; 41, 42).

10. Dispositif selon la revendication 8, **caractérisé en ce que** dans l'un au moins des deux brins de câble en croix (23, 24), il est prévu au moins un dispositif de renvoi de câble supplémentaire (71, 72) qui influence la position dans l'espace du point de croisement (25) des deux brins de câble en croix (23, 24).

11. Dispositif selon la revendication 7, **caractérisé en ce que** le dispositif de déviation de câble (56) comprend au moins deux éléments de déviation de câble (561, 562) agencés sur un disque circulaire (560) mobile en rotation autour de son axe (563), l'un au moins des éléments de déviation de câble (561, 562) prenant appui contre l'un des deux brins de câble en croix (23, 24).

12. Dispositif selon la revendication 11, **caractérisé en ce que** le dispositif de déviation de câble (56) est mobile en pivotement par rotation du disque circulaire (560) depuis la première position (I, I') jusqu'à la seconde position (K, K').

13. Dispositif selon la revendication 2, **caractérisé en ce que** le dispositif de déviation de câble (57) comprend deux éléments de déviation de câble (571, 572) couplés l'un à l'autre suivant un axe (570), qui font dévier respectivement l'un des deux brins de câble en croix (23, 24), et **en ce que** le dispositif de déviation de câble (57) est agencé avec faculté de translation suivant l'axe (570).

14. Dispositif selon la revendication 13, **caractérisé en ce que** l'axe (570) est agencé sensiblement parallèlement à la ligne de liaison du dispositif de renvoi de câble (32) inférieur antérieur avec le dispositif de renvoi de câble (42) inférieur postérieur, vus par rapport à la direction de déplacement de la vitre.

15. Dispositif selon la revendication 14, **caractérisé en ce que** le dispositif de déviation de câble (57) est agencé entre le dispositif de renvoi de câble (32) inférieur antérieur et le dispositif de renvoi de câble (42) inférieur postérieur.

16. Dispositif selon la revendication 14, **caractérisé en ce que** le dispositif de déviation de câble (57) est agencé entre le dispositif de renvoi de câble (31) supérieur antérieur et le dispositif de renvoi de câble (41) supérieur postérieur.

17. Dispositif pour régler une vitre de véhicule automobile déplacée par un lève-vitre à câble double brin, comportant deux dispositifs de renvoi de câble antérieurs, par rapport à la direction de circulation du véhicule automobile, agencés suivant la direction de déplacement de la vitre, deux dispositifs de renvoi de câble postérieurs, par rapport à la direction de circulation du véhicule automobile, agencés suivant la direction de déplacement de la vitre, un câble susceptible d'être entraîné et s'étendant en deux brins de câble en croix entre les deux dispositifs de renvoi de câble antérieurs et postérieurs suivant la direction de déplacement de la vitre et dans la zone entre les dispositifs de renvoi de câble antérieurs et les dispositifs de renvoi de câble postérieurs, dont les longueurs sont modifiables en sens opposés l'une à l'autre par des moyens pour allonger l'un des brins de câble en croix d'une longueur réglable, et pour raccourcir l'autre des deux brins de câble en croix sensiblement de la même longueur réglable, et comportant au moins un entraîneur mobile avec la vitre et par le câble suivant la direction de déplacement de la vitre,
**caractérisé en ce que**
les brins de câble en croix sont constitués par des brins de câble Bowden (26, 27) qui sont agencés au moins par tronçons dans des gaines Bowden (81 - 86), et **en ce que** les moyens pour allonger la longueur des brins de câble Bowden en croix (26, 27) sont constitués par des dispositifs d'ajustement (58 - 65) pour modifier la longueur des gaines Bowden (81 - 86).

18. Dispositif selon la revendication 17, **caractérisé en ce que** la longueur de la gaine Bowden (81 ou 82) entre les embouts de câble Bowden (15, 16), reliés aux entraîneurs (11, 12), de l'un des brins de câble Bowden (26 ou 27) est allongée d'une valeur prédéterminée, et la longueur de la gaine Bowden (82 ou 81) entre les embouts de câble Bowden (15, 16), reliés aux entraîneurs (11, 12), de l'autre brin de câble Bowden (27 ou 26) est raccourcie de la même valeur.

19. Dispositif selon la revendication 18, **caractérisé en ce que** les dispositifs d'ajustement (58, 59) règlent par translation et/ou par rotation la longueur des gaines Bowden (81, 82) indépendamment l'une de l'autre et sont agencés dans la zone entre les dispositifs de renvoi de câbles (31, 32 ; 41, 42) antérieurs et postérieurs.

20. Dispositif selon la revendication 18, **caractérisé en ce que** les dispositifs d'ajustement (60 - 65) pour modifier la longueur des gaines Bowden (83 - 86) sont couplés les uns aux autres, de sorte que lors d'un allongement de l'un des deux brins de câble Bowden en croix (26, 27) d'une longueur réglable, l'autre brin de câble Bowden respectif (27, 26) est raccourci sensiblement de la même longueur.

21. Dispositif selon la revendication 20, **caractérisé en ce que** les dispositifs d'ajustement (60 - 65) pour modifier la longueur des gaines Bowden (83 - 86) sont agencés dans la zone de croisement (20) des brins de câble Bowden en croix (26, 27) et modifient la longueur d'au moins une gaine Bowden (85, 86) dans le brin de câble Bowden (27) côté entraînement en sens opposé à la longueur d'au moins une gaine Bowden (83, 84) dans le brin de câble Bowden (26) non côté entraînement.

22. Dispositif selon la revendication 21, **caractérisé par** un dispositif d'ajustement (60, 61) comportant des cames (601, 602 ; 611, 612) à réglage angulaire, contre lesquelles prennent appui des logements de câble Bowden (91 - 94) des brins de câble Bowden (26, 27).

23. Dispositif selon la revendication 22, **caractérisé en ce que** les cames (601, 602) à réglage angulaire sont agencées dans deux plans superposés et présentent des surfaces de came spiralées (603, 604) contre lesquelles prennent appui les logements de câble Bowden (91, 92), reliés aux gaines Bowden (84, 85), d'un brin partiel respectif de câble Bowden (262, 272), tandis que les gaines Bowden (83, 86) des autres brins partiels respectifs de câble Bowden (261, 271) sont reliées directement au boîtier (600) du dispositif d'ajustement (60) via des logements (95, 96).

24. Dispositif selon la revendication 22, **caractérisé en ce que** les cames (611, 612) à réglage angulaire sont agencées dans deux plans superposés et présentent des surfaces de came spiralées (613, 614, 616, 617) contre lesquelles prennent appui les logements de câble Bowden (91 - 94), reliés aux gaines Bowden (83 - 86), des brins partiels de câble Bowden (261, 262 ; 271, 272).

25. Dispositif selon l'une au moins des revendications 22 à 24, **caractérisé en ce que** le dispositif d'ajustement (60, 61) comprend une zone de coopération de formes (605, 615) pour recevoir un outil d'ajustement.

26. Dispositif selon la revendication 21, **caractérisé en ce que** le dispositif d'ajustement (62) comprend une roue dentée (621) qui engrène avec deux crémaillères (910, 940) qui sont reliées à des brins partiels de câble Bowden (261, 272) des deux brins de câble Bowden en croix (26, 27), qui sont agencés entre le dispositif d'ajustement (62) et les dispositifs de renvoi de câble supérieurs ou inférieurs.

27. Dispositif selon la revendication 26, **caractérisé en ce que** les crémaillères (910, 940) sont reliées aux logements de câble Bowden (91, 94) des brins partiels de câble Bowden (261, 272) ou sont conformées sur les logements de câble Bowden (91, 94).

28. Dispositif selon la revendication 21, **caractérisé en ce que** le dispositif d'ajustement (63) est constitué par une transmission à leviers en parallélogramme dont les articulations mutuellement opposées (632 - 635) sont reliées aux logements de câble Bowden (91 - 94) des brins de câble Bowden (26, 27).

29. Dispositif selon la revendication 28, **caractérisé par** un dispositif de déplacement à broche (636 - 638) pour régler la distance des articulations mutuellement opposées (632 - 635) de la transmission à leviers en parallélogramme.

30. Dispositif selon la revendication 21, **caractérisé en ce que** le dispositif d'ajustement (64) est constitué par un coulisseau (641) avec des coulisses (642, 643) inclinées en sens opposés l'une à l'autre par rapport à sa direction de translation, et **en ce que** deux tenons (644, 645) reliés à des logements de câble Bowden (91, 92) d'une gaine Bowden respective (84, 86) des brins de câble Bowden en croix (26, 27) sont montés dans les coulisses (642, 643).

31. Dispositif selon la revendication 21, **caractérisé en ce que** le dispositif d'ajustement (65) comprend un levier (651) mobile en rotation autour d'un axe (654) et comprenant deux coulisses (652, 653) prévues à des extrémités opposées, dans lesquelles viennent s'engager des tenons (655, 656) reliés aux logements de câble Bowden (91, 92) de deux gaines Bowden (84, 86) des brins de câble Bowden en croix (26, 27).
